# EUROPEAN PATENT APPLICATION

(11) **EP 4 228 275 A2**
(43) Date of publication of application: **16.08.2023**
(21) Application number: 23167385.6
(22) Date of filing: 25.10.2017
(51) Int. Cl.: H04N 21/647, H04N 21/61

(54) **NETWORK-BASED DOWNLOAD/STREAMING CONCEPT**

(30) Priority: 03.11.2016 EP 16197124
(62) Divisional of application: 17801016.1
(71) Applicant: Fraunhofer-Gesellschaft zur Förderung der angewandten Forschung e.V., 80686 München (DE)
(72) Inventor: Schierl, Thomas, 10587 Berlin (DE); Hellge, Cornelius, 10587 Berlin (DE); Sánchez de la Fuente, Yago, 10587 Berlin (DE); Gül, Serhan, 10587 Berlin (DE); Wiegand, Thomas, 10587 Berlin (DE); Wirth, Thomas, 10587 Berlin (DE)
(74) Representative: Schenk, Markus

(57) **Abstract**

Concepts for streaming/downloading data over a network which are presented which are more efficient, for example, in terms of fair use of network resources, avoidance of empty buffer situations or in terms of necessary amount of data traffic over the network, in general and/or which enable achieving efficiency improvements in downloading or streaming data with respect to a higher number of network environments or is more easily transferable onto further network environments.

## Description

The present application is concerned with network-based data download and streaming of data over networks such as cellular networks.

In [1] the ongoing LTE study item on context aware service delivery is described in RAN. The motivation for this is that operators are facing more and more challenges in providing mobile broadband services due to high-data rate and low latency requirements and also due to network backhaul link constraint:
- Long E2E delay to deliver mobile content due to e.g. multi-hop data forwarding may constitute a problem in some transport network conditions.
- High Service load in the backhaul and core network (CN) (e.g., PDN GW and SGW) due to centralized node deployment in case of under-dimensioning.

These constraints may negatively affect the various user services. Based on network deployment scenario, operators may look to solutions to address these constraints and satisfy various user service requirements, for experiential enhancements.

Voice was the major service and 3GPP defined voice specific cross-layer optimizations for 3G and 4G. Web based streaming video and Apps are expected to take majority of 4G/5G bandwidth, and are key source to further increase the ARPU (Average Revenue Per User) for operators. MPEG and 3GPP SA4 have been considering cross-layer optimizations by RAN and App mutual aware, e.g. network assisted DASH, video-aware scheduling. ETSI MEC is working on mobile video delivery optimization and local content caching. Deep cross-layer optimizations for Web based streaming video and Apps could be a possibility for delivering the desired benefits. Other SDOs/Working groups, e.g. ETSI MEC work on mobile video delivery optimization and local content caching, too.

There are already some network based proprietary solutions for above. These network solutions either require extensive DPI (Deep Packet Inspection) for user plane packets or private interface to content server. Besides, a problem remains in how DPI works for encrypted content.

The above solutions may be difficult for operators with multiple network vendors to deploy and operate. That is, there is a gap between current LTE network capability and the diverse user service requirements in future network.

Currently proposed solutions are described in [3].

Briefly summarizing the above, there is still a need in order to render streaming and data download over networks even more efficient. Depending on the network, the throughput situation which a client streaming/downloading data over the network faces, may vary extremely and thus, a big benefit may be obtained by providing the client with the opportunity to take advantage of knowledge on the actual situation of the network. For instance, without such information, a client may merely be able to survey its buffer fill level in order to derive information on the development of the network situation. This sort of surveillance, however, comes with a certain amount of latency. Moreover, in this manner, a client is not able to "forecast" the network behavior as the client is not able to associate throughput changes to typical network situations. The knowledge about such network situations, however, would allow for the client to avoid unnecessary buffer stocking, unnecessary demand for network resources, accidentally running into an empty buffer situation, or the like.

Accordingly, it is an object of the present invention to provide a concept for streaming/downloading data over a network which is more efficient, for example, in terms of fair use of network resources, avoidance of empty buffer situations or in terms of necessary amount of data traffic over the network, in general, and/or which enables achieving efficiency improvements in downloading or streaming data with respect to a higher number of network environments or is more easily transferable onto further network environments.

This object is achieved by the subject matter of the independent claims of the present application.

In accordance with a first aspect of the present application, the information leaked from network to client pertains to events of preliminary decrease or increase in throughput. Such events may, for instance, be handovers in a cellular network or events known to occur in certain situations such as a user entity on which the client operates, traveling on a predetermined path through an area served by the network, the path traversing, for instance, cells of varying throughput capacities. A network device detecting such events and sending, depending on the detection, a predetermined signal to a client, enables client and network to more efficiently use the network resources available and/or prevent empty buffer situations and/or enable a fairer share of the network resources. The preliminary nature of the decrease and increase in throughput is something otherwise not predictable by the client at the time the onset of the preliminary decrease or increase in throughput affects the buffer fill level of the client. The preliminary nature of a decrease or increase in throughput also enables network device and/or client to perform measures aimed at pre-compensating the effect of the preliminary decrease or increase in throughput on the streaming. Thus, in accordance with the first aspect of the present application, data streaming over a network is rendered more efficient by a network device detecting an event of preliminary decrease or increase in throughput at which a client streams a data stream from a server, and depending on detection of the event of preliminary decrease or increase in throughput, sending to the client a predetermined signal. Likewise, in accordance with the first aspect of the present application, data streaming over a network is rendered more efficient by a device for streaming the data stream from a server which receives a predetermined signal from a network device and, depending on the predetermined signal, changes a buffering strategy, changes a size of a buffer for buffering the data stream, performs bit rate selection in adaptively streaming the data stream, and/or changes between a pull and a push mode.

In accordance with a further aspect of the second application, network-based data streaming is rendered more efficient in terms of efficient use of network resources and fair use of network resources, in that information on a remaining portion of the data stream, yet to be downloaded and streamed, is leaked from client to a network device which, in turn, uses this information in participating in, or performing a, negotiation of network resources. By having access to this sort of information, the available network resources may be shared more effectively among the user entities served by the network. For instance, if a client currently has merely a small portion to be downloaded left anyway, and the client is within an area of the network where the capacity is high, merely for a brief time, then it might be favorable to try to satisfy this client immediately by spending enough resources for this client to have the data stream downloaded before leaving the high throughput area, or before the high throughput opportunity vanishes. Additionally, or alternatively, the network device may send, depending on the information on the remaining portion, a predetermined streaming control signal to the client so that similar results occur.

In accordance with a further aspect of the second application, network-based data streaming is rendered more efficient in terms of efficient use of network resources and fair use of network resources, in that information on a play-out mode is leaked from client to a network device which, in turn, uses this information in participating in, or performing a, negotiation of network resources for a plurality of user entities, including the user entity at which the client is operating which the play-out mode relates to. Play-out modes may, for instance, encompass, besides a normal play-out mode wherein the data stream is play-out at a normal speed such as real time, a pause mode, a slow play mode such as slow motion in the case of video, and fast play mode such as fast-forward or fast-backward playing mode. By having access to this sort of information, the available network resources may be shared more effectively among the user entities served by the network. For instance, if a client currently is in a pause mode, but its buffer is liable to deplete because of a low fill level, proactively filling the buffer of this client in order to be prepared for a re-entering of a normal play mode by the client, is less urgent when compared to a situation where the client would already be in a normal play mode. In situations of high data traffic, accordingly, clients being currently in a pause mode may, for instance, be provided with less network resources during negotiation than compared to being in a normal play-out mode. In a similar manner, a network device may exploit information on the client being in a slow play mode or fast play mode. In a similar manner, a device in accordance with this aspect of the present application, configured for streaming a data stream from a server via a network, is configured to inform a network device about the play-out mode which the device uses for play-out out of different play-out modes. In accordance with a variant of this aspect of the present application, the network device uses the hint concerning the play-out mode of the client for controlling the streaming behavior of the client instead of, or in addition to, correspondingly participating in, or performing, the negotiation of the network resources.

In accordance with a further aspect of the present application, network-based data streaming is rendered more efficient by providing the client with a control mechanism for controlling the client's bitrate adaptivity in adaptive streaming from outside. The network device causes, by negotiation, an allocation of network resources to the client which suffices for a certain throughput, and based on the later, the network device controls the client via respective signals.

In accordance with a further aspect of the present application, network-based data streaming is rendered more efficient by the client sending information on a buffer fullness to the network device which, in turn, may send to the client, in a manner depending on the buffer fullness, a predetermined streaming control signal. In other words, in accordance with this aspect, the client receives, responsive to informing the network device about its buffer fullness, streaming guidance in the form of the predetermined streaming control signal which may, for instance, comprise an advice to preliminarily stop downloading for reasons of fairness, for instance.

In accordance with an even further aspect of the present application, data streaming over a network is rendered more effective by providing the client with the opportunity to enter a bit rate discontinuous streaming mode and informing the network accordingly. By this measure, the network device may use the information on the client having entered the bit rate discontinuous streaming mode, adjusting the participation in, or performance of, the negotiation of network resources for the client. The bit rate discontinuous streaming mode may, for instance, involve the client allocating a larger memory for buffering the data stream. By this measure, the data stream may be streamed to the client more discontinuously. This may be exploited in allocating the network resources since the network resources needed for the client may be allocated to the client with larger freedom as far as the allocation distribution in terms of time is concerned. Temporal phases of high data traffic may be bridged by non-allocation of network resources to clients having entered a bit rate discontinuous streaming mode while temporal phases of low data traffic may be used in order to fill-up the buffer of such clients. In accordance with a further aspect of the present application, network-based data streaming may be rendered more efficient by providing a network device with the ability to send predetermined streaming control signals to a client in a manner depending on a current location of the client. With this measure, the network device may exploit statistics of past streaming histories and other information in order to guide the streaming behavior of a certain client depending on its location.

Closely related to the first aspect of the present application, in accordance with a further aspect of the present application, network-based streaming is rendered more efficient by triggering a client to send a predetermined signal to the network device upon the network device informing the client on network related information such as an imminent change in throughput at which the data stream is streamed from the server via the network. By this measure, the client needs not inform the network device continuously on characteristics relating to the current streaming situation of the client continuously, intermittently, or periodically. Rather, the network device may trigger such data flow from client to network device upon the network device detecting an imminent change in throughput such as, for instance, a preliminary decrease or increase in throughput.

In accordance with a further aspect of the present application, downloading data items selected by user input from a server is rendered more efficient by providing the device with the ability to perform a pre-fetch of data items depending on a information on a preliminary change (increase or decrease) in throughput at which the data items may be downloaded.

In accordance with a further aspect, a network device is made an entity existing beyond download device (download may be streaming or not) and network. That is, the network device functionality enabling considering both types of information namely network-related data as well as client-related data, becomes transferable onto a higher number of network environments with, consequently, providing the advantageous effects above with respect to a higher number of scenarios.

Advantageous implementations of the above-outlined aspects of the present application are the subject of the dependent claims. It is noted that the aspects discussed above may be combined with each other in a manner not restricted to the extent such combinations are indicated by way of dependent claims. Beyond this, preferred embodiments of the present application are described further below with respect to the figures among which:
- Fig. 1: shows a schematic block diagram illustrating a system for streaming data or downloading data from server to client over a network as an example where the subsequently described streaming devices or download devices as well as network devices may be used;
- Fig. 2: shows a schematic diagram illustrating tasks performed by a streaming device and streaming data from a server;
- Fig. 3: shows an example of a policy and charging control (PCC) architecture to deliver network related information such as QoS for DASH services as an example for how to leak network related information from network to streaming device;
- Fig. 4: shows a block diagram of a user entity for illustrating that a network device in accordance with embodiments of the present application may reside within the user entity;
- Fig. 5: shows a process of RAN assistance rate selection as a possible way to share information between network and client in bridging the interface between client and base station in radio network situations;
- Fig. 6: shows schematically a block diagram of a typical cellular network in order to illustrate possible interfaces which might be used in order to share and leak information from network to client and vice versa;
- Fig. 7: shows a schematic diagram illustrating a possibility according to which a proprietary interface MRI is used to share information between a network device which is able to act as a DANE and send PER messages accordingly, and the network;
- Fig. 8: shows a schematic diagram illustrating the possibility that the network device in accordance with embodiments of the present application may be embedded within the network 12, here exemplarily within the base station of a cellular network;
- Fig. 9: shows, by way of a flow diagram, a mode of operation of a network device in accordance with an embodiment of the present application where the network device detects events of preliminary increase or decrease in throughput and sends a predetermined signal to the client accordingly;
- Fig. 10: shows a graph indicating a variation of the throughput at which a data stream is streamed to a client in time, the variation in time showing an event of preliminary decrease in throughput, in order to illustrate some possibilities as to how to favorably bridge such an event;
- Fig. 11: shows an exemplary graph like Fig. 10, but with respect to an example where an event of preliminary increase in throughput is shown;
- Fig. 12: shows a graph of a buffer fill level in a client and its variation in time if appropriate counter measures are performed at the event of preliminary decrease in throughput;
- Fig. 13: shows steps or functionalities of a streaming device in accordance with an embodiment of the present application where the streaming device is responsive to a predetermined signal in a manner so as to appropriately deal with situations like events of preliminary increase and decrease as shown in Figs. 10 and 11, also with respect to other situations as they are discussed in the following figures;
- Fig. 14: shows a schematic diagram illustrating a network device in accordance with an embodiment of the present application and a corresponding streaming device in accordance with the present application wherein information on a remaining not yet streamed/downloaded data portion of the data stream is signaled from client to network device;
- Fig. 15: shows a schematic diagram illustrating a network device and streaming device in accordance with an embodiment of the present application, wherein the streaming device informs the network device on a currently chosen play-out mode;
- Fig. 16: shows a schematic diagram illustrating a network device and a streaming device in accordance with an embodiment of the present application, wherein a streaming control signal from the network device to the streaming device is sent out by the network device with the network device, in turn, accordingly negotiating network resources for the client, so that the client may rely on the streaming control signal for purposes of adaptive streaming;
- Fig. 17: shows a schematic diagram of a network device and a streaming device in accordance with an embodiment, wherein the client informs the network device on its buffer fullness;
- Fig. 18: shows a schematic diagram of a network device and a streaming device in accordance with an embodiment, wherein the client informs the network device on its entrance of a bit rate discontinuous streaming mode;
- Fig. 19: shows a schematic diagram of a network device and a download device in accordance with an embodiment, wherein a pre-fetch of the download device is guided by information from the network device;
- Fig. 20: shows a schematic diagram of a network device and a download/streaming device in accordance with an embodiment, wherein the network device is an entity beyond download/streaming device and network which communicates over two interfaces with both;
- Fig. 21: a schematic signal flow diagram showing, using horizontal arrows, and using a temporal sequence from top tp bottom, signal flows between network entities and the download/streaming device in a situation where the streaming/download device starts its download/streaming; and
- Fig. 22: a schematic signal flow diagram showing, using horizontal arrows, and using a temporal sequence from top tp bottom, signal flows between network entities and the download/streaming device, here a streaming device, in an exemplary situation where the streaming device provides the network device with download related information such as buffer level and the network device arranges with the network and the streaming device that both agree on a throughput boost.

The subsequent description of preferred embodiments of the present application starts with a description of a network-based streaming/downloading system, i.e. a system for streaming/downloading data from a server to a client over a network. The description of this system shall serve as an example for a scenario where the subsequently explained embodiments of the present application may be used. This description may also serve as a basis for a description and explanation of functionalities of streaming devices and network devices of embodiments described later on. Additionally, the description of the systems shall serve as a basis for explaining the problems associated with network-based streaming/downloading of data. Afterwards, several possibilities are described as to where a network device in accordance with subsequently described embodiments may be arranged within the system previously discussed. Even then, various embodiments with respect to the aspects of the present application are described along with the advantages resulting therefrom.

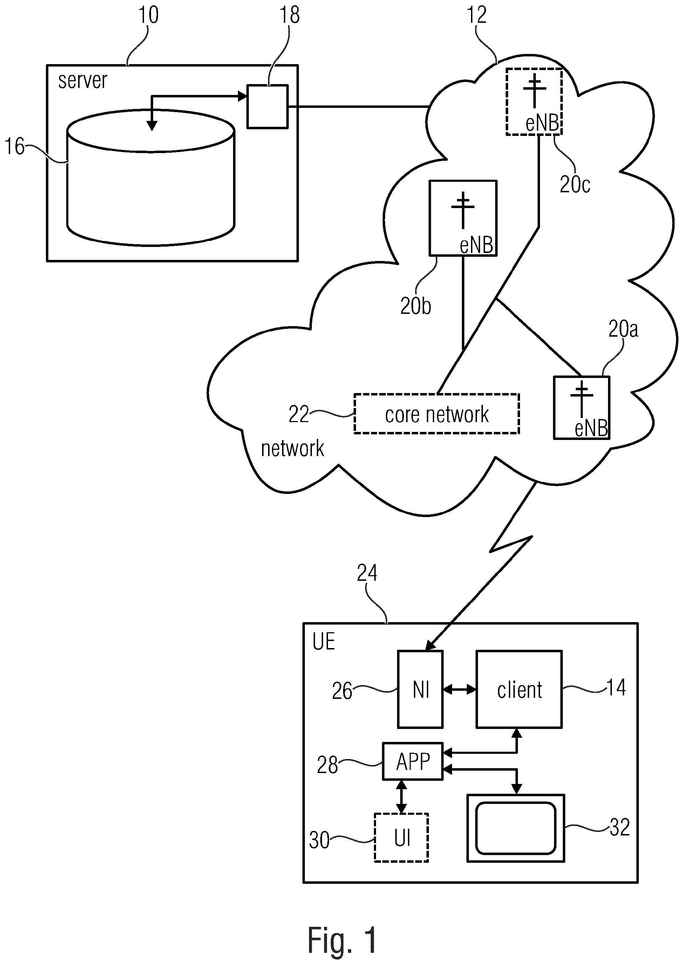

Fig. 1 shows a system for streaming/downloading data from a server 10 over a network 12 to a client 14. Server 10 comprises a memory or storage 16 for storing the data and a controller 18 connected to storage 16 to fetch data segments or data items requested to be downloaded by client 14.

In Fig. 1, the network 12 is exemplarily shown to be a cellular network composed of one or more base stations 20a, b, c each of which is internally connected, in a wired manner, to a core network 22. It should be noted, however, that the embodiments described later on are not restricted to any kind of network 12, and are not restricted to any specific way server 10 and client 14 are attached to network 12. For sake of illustration purposes only, Fig. 1 illustrates that server 10 is attached to network 12 via a wired connection such as an internet connection, while client 14 operates on a user entity 14 served by at least one of base stations 20a-20c, so as to wirelessly communicate with this base station. It is to be emphasized, however, that the sort of network bases discussed here for illustration purposes and a better understanding of the following embodiments, is not understood to be restricted and the problems and advantages which are overcome and provided by the subsequently explained embodiments may also occur in an environment or system while server 10 and client 14 communicate with each other via another network. For example, for some reason, even a cable-based network may have temporally and/or spatially varying data traffic which gets, at some location and/or some point in time, close to or even increases a network capacity of network 12 so that the sharing of network resources could take advantage of knowledge of a current streaming situation at the client side, and vice versa the client 14 could take advantage of knowledge of resource development, i.e., shortcomings of overcapacities, occurring at the network side.

Fig. 1 illustrates user entity 24 as comprising a network interface 26 configured to perform the wireless communication with the currently serving base station, such as base station 20a. This means that the client 14 communicates with server 10 via network interface 26 and that network interface 26 forms the communication bridge between user interface 24 and network 12.

As an optional example only, Fig. 1 shows that a user entity 24 also comprises an application 28 which interacts with the client 14 as well as a user input interface 30 and a user output interface 32. For example, user entity 24 may comprise a processor and application 28 and client 14 may be programs running thereon. Even the network interface 26 may, for example partially, run onto this processor. User input interface and user output interface 30 and 32 may, for instance, be implemented by a touch screen with the data streamed/downloaded being, for instance, video data. However, the sort of data streamed/downloaded in not restricted to video data as described in the following.

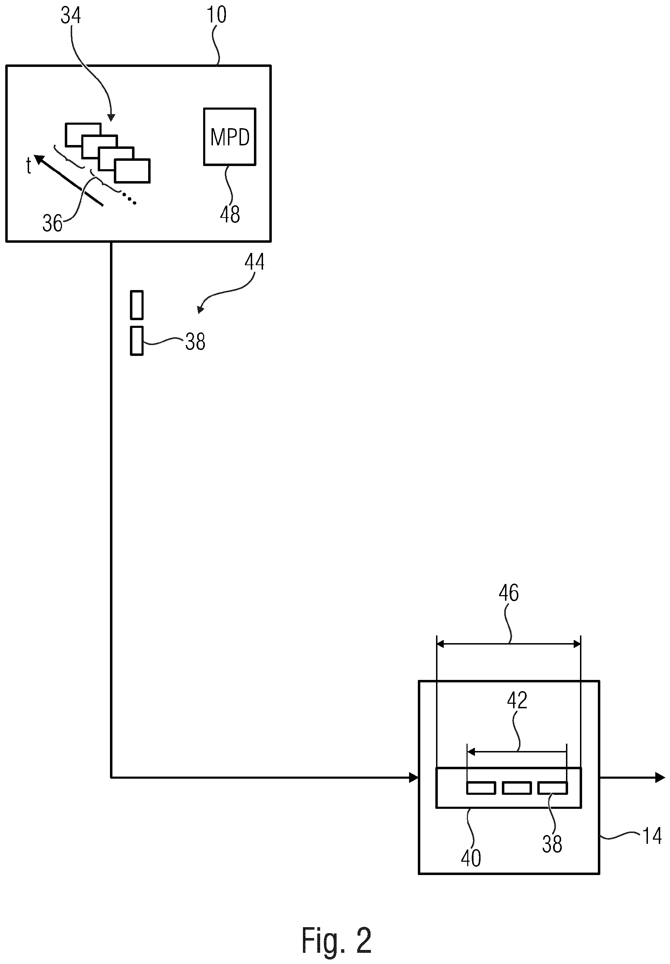

Fig. 2, for instance, illustrates the case where the data streamed/downloaded by client 14 from server 10 is media associated with a certain play-out speed. The media data may, for instance, be a video 34 as illustratively indicated in Fig. 2, but other examples are feasible as well, such as an audio data stream, 3D-data such as mash data of a 3D-model or the like. The media data 34 is available at server 10 in temporal segments 36. In other words, each of a sequence of data segments represents, or has encoded thereinto, a respective temporal segment 36 so that sequential decoding and play-out of the data segments result in a reproduction of media 34. Client 14 requests the data segments 38 from server 10 sequentially and buffers them in a buffer 40. Client 14 outputs the buffered data segments 38 sequentially at the predetermined play-out speed and depending on the rate at which data segments 38 arrive at client 14, a fill level 42 within buffer 40, i.e. a buffered and downloaded amount of the data stream 44 formed by the sequence of data segments 38, varies in time. Preferably, the size of the buffer, i.e. its data capacity, suffices in order to compensate for variations in the throughput at which data stream 44 is streamed/downloaded from server 10 to client 14. An actual decoding of the data stream 44 or data segments 38 may, for instance, take place in the application 28 shown in Fig. 1 which may, for instance, merely form a decoder, but may have also additional functionalities such as a switching between several programs, such as a video or audio on demand application, a virtual reality application, computer game or the like.

Although not depicted in Fig. 2, it might be that server 10 offers media 34 at different so-called bit rate representations. These different bit rate versions or bit rate representations of media 34 may differ from each other, for instance, in the quality of the coded media content, such as, for instance, in spatial resolution, temporal resolution, signal-to-noise ratio, bit-depth or the like. While streaming, client 14 could switch between these representations so that the data segments 38, the sequence of which forms the streamed/downloaded data stream 44, belong to different representations of these so that the bit rate of data stream 44 varies in time just as the quality of the media 34 coded thereinto does. In other words, each of these representations may be associated with a different pair of bit rate and quality at which media 34 is coded into the respective representation, each representation, in turn, being segmented into data segments. The sequence of data segments 38 selected and downloaded from server 10 by client 14 refer to consecutive temporal segments 36 of media 34. As long as a run of immediate sequential data segments 38 belong to one certain representation, the bit rate of data stream 44 streamed/downloaded to client 14 as of a constant bit rate, for instance, with a bit rate of data stream 44 changing when, after this run of consecutive data segments, following data segments 38 belong to a different representation of different bit rate/quality. A media presentation description 48 may be available at server 10. Client 14 may request a media presentation description 48 from server 10 before commencing streaming data stream 44 from server 10. The media presentation description 48, on manifest file, may provide the client 14 with the information on addresses of the individual data segments available at server 10, and, if applicable, the different representations at which a certain data is available at server 10.

Before describing the mutual influence between the network 12 on the one hand and the streaming/download of data on the other hand, it should be briefly noted that some of the embodiments described below do not relate to data to be played-out for data describing some temporally varying information. For instance, the data offered at server 10 could form a plurality of data items mutually linked to each other via links. For instance, each data item could form textual, video and/or audio information for the user providing the user with the ability to switch to other data items. That is, the currently presented data item, i.e. the data item currently presented to the user, could have one or more links to other data items so that, upon selection by the user, one of these linked data items is presented to the user. In this case, client 14 may be left off and application 28 is, for instance, directly connected to network interface 26 and forms, by itself, a kind of client. The application 28 could have a buffer 40 in order to buffer data items which, at an increased probability, are visited next by the user, i.e. data items directly linked to the currently presented data item, or linked to the currently presented data item via a low number of intermediate data items, i.e. a low number of inter-item-links. Internet pages, for instance, may form an example for such data items.

If network and client are completely agnostic with respect to the situation of each other, this may be disadvantageous for many reasons. At best, network 12 would know about the situation of client 14 such as its current buffer 40, the available representations at the server from which the respective client streams/downloads its data stream and the like. The advantage of such knowledge would be that network 12 may take this information into account and share the network resources. Having a huge buffer fill level 42 may easily cope with a preliminary decrease in allocated network resources. If, in turn, network 12 has knowledge about a client's buffer fill level 42 about to become zero, i.e. the client's buffer runs out of buffer data segments, network 12 may take this, i.e. the danger of this client running into an empty buffer situation or stall situation, into account when allocating the current network resources. The problem associated therewith is the probably high number of clients performing streaming/downloading tasks via this network 12 in which case the data flow between network 12 and client 14 would be considerably high. Accordingly, any concept of improving network-based streaming/downloading should be efficient in this regard, too.

Before describing embodiments of the present application, however, the following description focuses on the issue of how to get the network 12 on the one hand and client 14 on the other hand into a situation where they communicate with each other in order to inform each other on their current situation. In order not to over duly complicate the following description, the term client 14 is used in the following also in order to cover those examples where application 28 itself assumes the task of a client as already described above as an alternative of the actually depicted situation of Fig. 1. In particular, normally, client 14 is agnostic with respect to the underlying network via which the same receives the data stream or data from server 10. In accordance with the embodiments set forth below, a network device or network entity is added outside client 14 so as to have access to the data communication between server 10 and client 14. The "addition" of a network device in accordance with any of the embodiments described below may be done by positioning this network device within the user entity 24, within network 12 or even server 10. The "addition" may be done by adding a certain functionality to any entity already shown in Fig. 1 or adding an additional module. In any case, the network device is able to communicate with client 14 and is able to access network-related data either by being itself part of network 12 or by communicating with network 12. These communications, from a network layer perspective, i.e. in terms of an OSI hierarchy layer structure, take place at different layers and accordingly, the concepts described below are also sometimes called cross-layer streaming/downloading concepts.

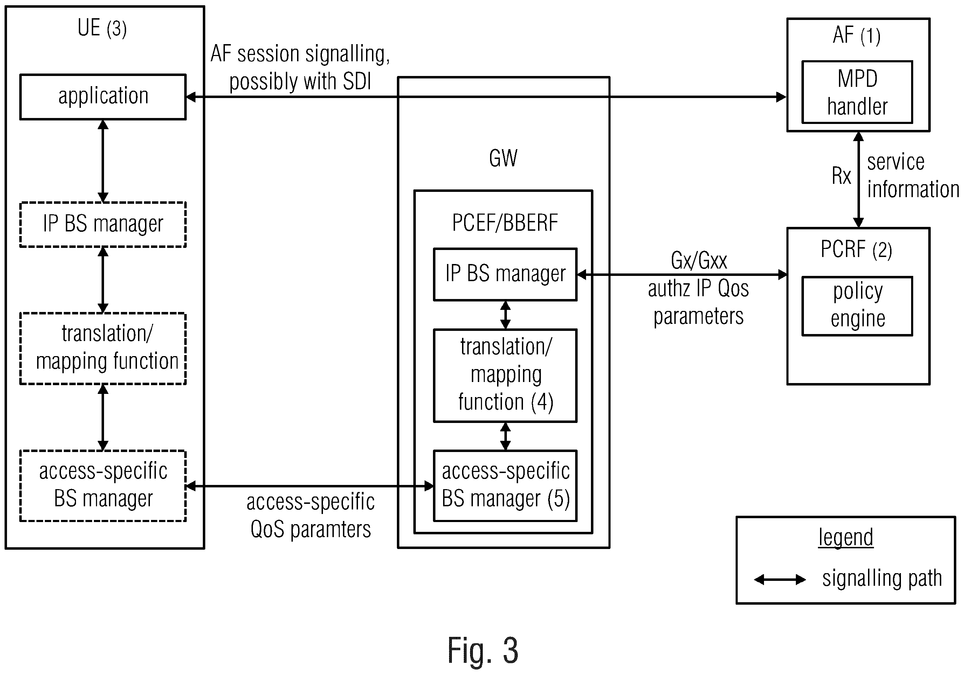

One possibility of cross-layer information sharing between client domain on the one hand and network domain on the other hand is depicted in Fig. 3 taking 3GPP as an example.

In current 3GPP system, PCC-level (Policy Control & Charging) signaling can already accomplish the communication of network QoS information to the client device (user equipment or UE) and therefore the DASH client can locally (within the UE) obtain the QoS information via internal APIs. The DASH server acts as Application, which has knowledge of the application type and of the MPD. DASH content information can be extracted by Application Function (AF) from the MPD, mapped to appropriate attribute-value pairs (AVPs) and provided to the policy and charging rules function (PCRF) over the Rx reference point. The PCRF combines the DASH-related AVPs received over the Rx reference point and the input received from the Gx and Gxa/Gxc reference points with user-specific policies data from the subscriber profile repository (SPR) to form session-level policy decisions and provides those to the PCEF and BBERF.

In other words, the PCRF takes the subscriber information into account when setting QoS. Access-specific QoS parameters are then communicated to the UE from PCEF/BBERF [1]. It is specified in TS 23.401 [5] how the UE acquires QoS information during dedicated bearer activation and bearer modification with bearer QoS update.

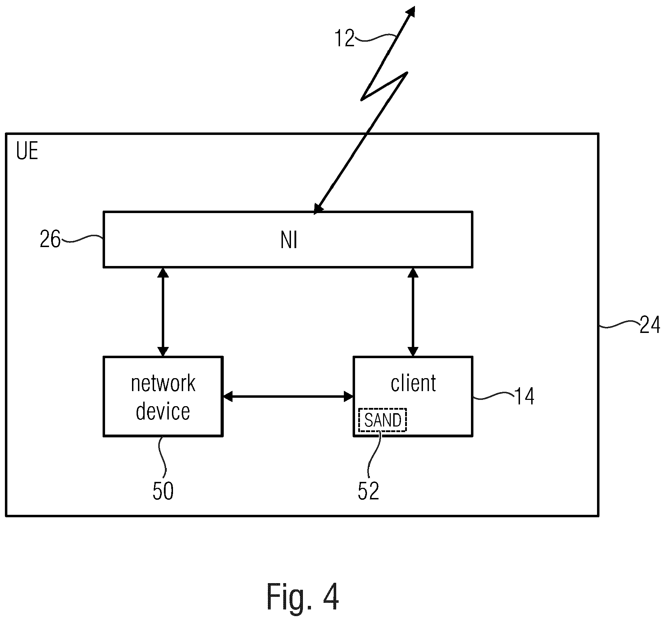

That is, Fig. 4 shows an example where a network device for which embodiments are described in more detail below, may be positioned, or operate on, the user entity 24. The network device 50 is attached to, or communicates with, network interface 26, i.e., has access to network-related information such as bearer connections, carriers, allocated resources, handovers and the like. Network device 50 may even influence the network's internal operation, for instance, network device 50 may participate in, or perform, negotiations of network resources for client 14. On the other hand, network device 50 is interfaced with client 14. That is, network device 50 is able to communicate with client 14 via a special interface, for instance, such as the just-described API interface. By this measure, client 14 may obtain knowledge about network-related internal information and take this information into account in managing the streaming process, such as, for instance, in controlling the buffer fill level 42 and/or selecting among the various bit rate versions or representations available at server 10. Other possibilities as to how client 14 may favorably take advantage of the knowledge of network-related information is described further below.

Another possibility of cross-layer awareness is described with respect to DASH as a special example for an adaptive streaming environment. It will be clear to the reader, however, that similar concepts would also be applicable to other adaptive streaming standards.

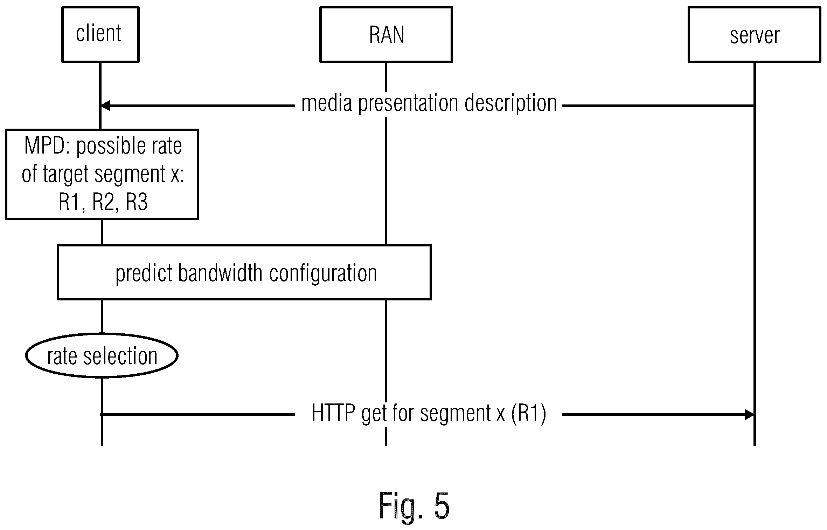

In the example illustrated in Fig. 5, the RAN provides Predicted bandwidth to the client. The Predicted bandwidth for a specific UE is the throughput estimated to be available at the radio downlink interface in a period of time.

The idea here is the following: Cross layer mechanism can be very beneficial for a DASH session. 23009-5 describes the architecture and messages that can be exchanged between a DASH client, DASH server and DASH Aware Network Elements (DANEs). Using the Parameters Enhancing Reception (PER) Messages, the DANE can inform the client about cached segments, alternative segment availability, timing information for delivery, network throughput/QoS, etc., which leads to intelligent DASH client adaptation behavior. Using the Metrics and Status messages, the DASH clients can inform the network (i.e., DANE) about requested bandwidth / quality, anticipated DASH segments, acceptable alternative content, etc. This leads to intelligent caching and real-time media processing at the server or proxy [6].

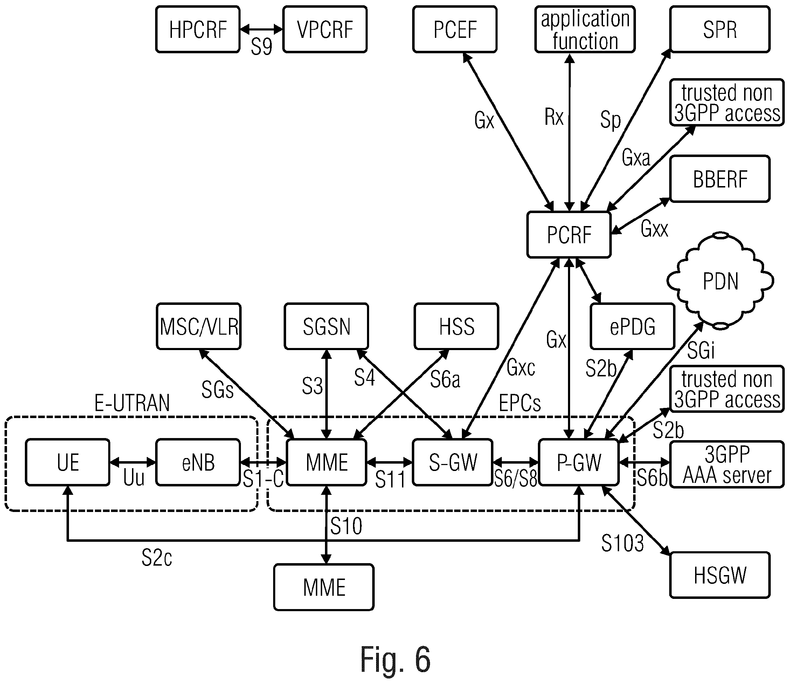

One of the issues still is how the high-layer messages can be used at lower layers in the Core Network (CN) and Radio Access Network (RAN) or vice versa (how low layer messages can be brought to higher layers). A network structure is shown in Fig. 6.

It is the DANE at the client side as depicted in Fig. 4, the DASH Client 14 may talk and send the SAND messages to its local address where the DANE is implemented. This allows for having a standard defined interface for communicating and cross-layer API based on a DANE that is in charge of translating that messages to lower level messages (Radio Resource Control -RRC or L2) or vice versa. Once translated to APP-Layer messages, SAND messages are exchanged between the user DANE 50 and the SAND 52 part of the DASH Client.

In the following, several messages are described that can be added to SAND and/or lower level messages such as in interfaces RRC, S1-C (UE communicating with the Mobility Management Entity - MME), PC5 (direct communication between UEs) or any other interface.

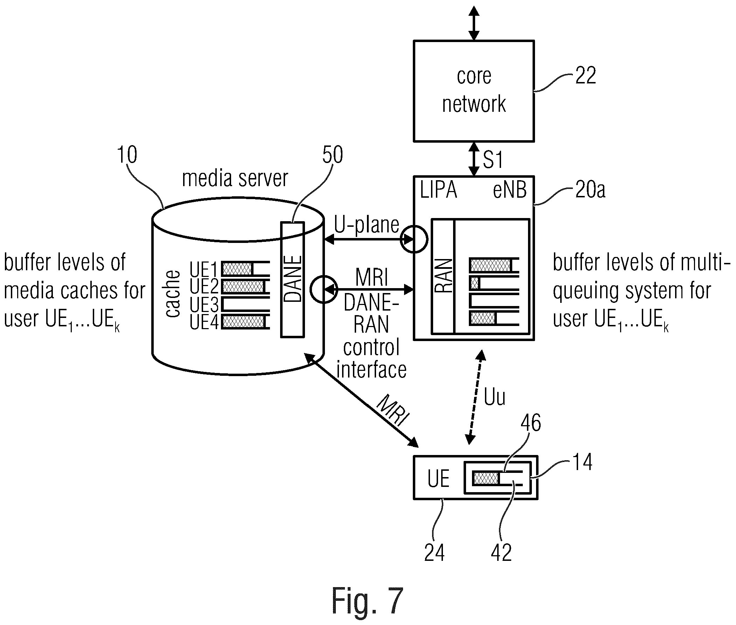

For the sake of completeness, and before starting with the description of embodiments of the present application, Fig. 7 shows a constellation or possibility where a network device being responsible for cross-layer knowledge linking, is positioned outside the UE 24, namely, here exemplarily within media server 10. The network device 50, here again exemplarily called DANE with exemplarily assuming DASH as an example for the adaptive streaming protocol which assumption shall not be understood as being restrictive, communicates with the network via a new interface called media-RAN interface. This media-RAN interface, briefly called MRI, allows media push/pull depending on radio status, for instance, as it is explained below with respect to one of the embodiments. The interface may provide the DANE 50 with information from the network. This information may have been sent from the base station 20a currently serving the UE 24 on which client 14 operates. Examples for such network information which may be favorable to know for DANE 50 are: channel quality (CQI), interface status (SINR= Signal-to-interference-plus-noise ratio); aggregation status, e.g. carrier aggregation, cell-load at the base station (eNB), handover fast-pull/delay (block-off cue and so forth).

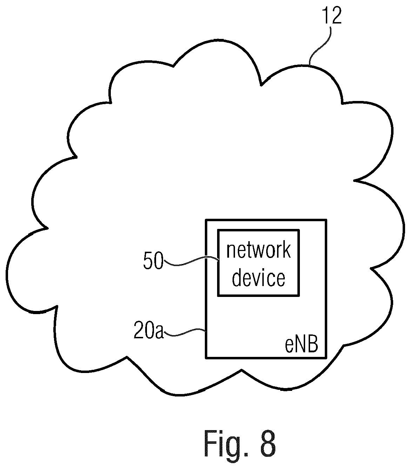

As a last note before starting with the description of embodiments of the present application, it is noted that the network device 50 for which embodiments are described below, may even alternatively be positioned in the network itself as depicted in Fig. 8. In such a case, the network device 50 may communicate with the client over SAND for example, when, for instance, Local IP Access (LIPA) may be used by the network device 50 in order to commence such SAND messages.

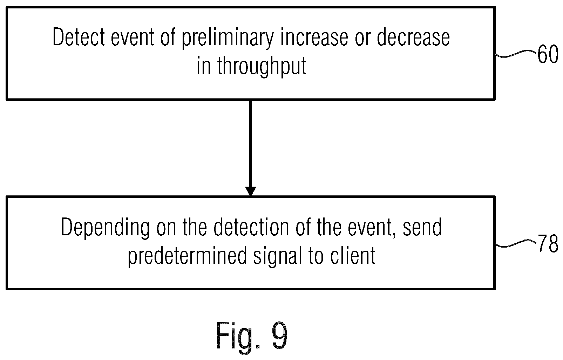

By way of Fig. 9, the following description now describes an embodiment when network device 50 improves the efficiency of data streaming to the client by taking advantage of its knowledge about events of preliminary decrease or increase in throughput. In particular, Fig. 9 shows a mode of operation of network device 50 in accordance with an embodiment of the present application complying with the first aspect.

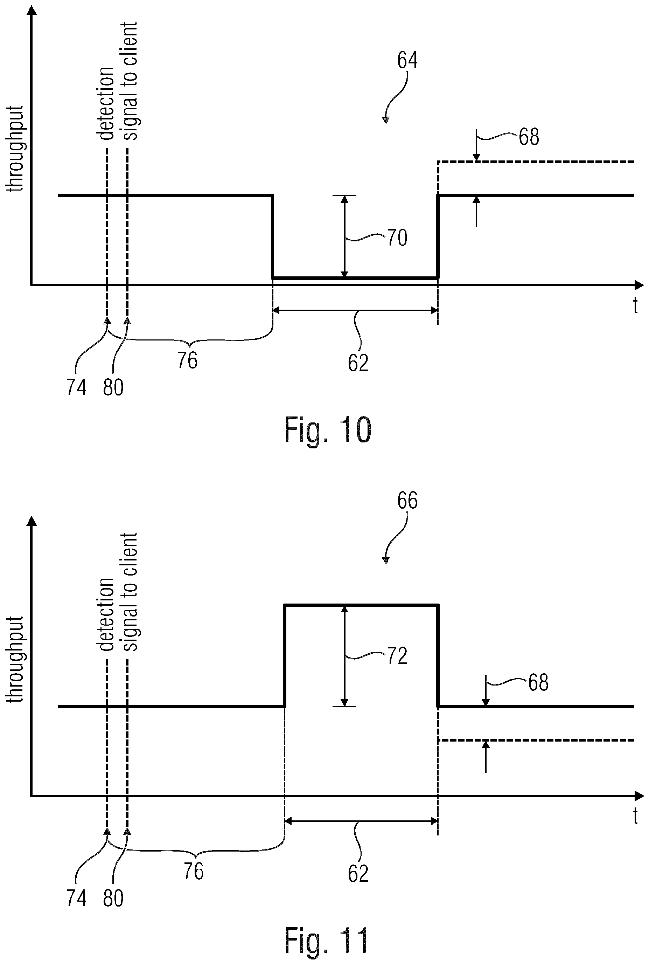

In particular, in accordance with Fig. 9, the network device 50, which may be positioned in the UE as depicted in Fig. 4, within the network as depicted in Fig. 8, and within the server as depicted in Fig. 7, performs a detection of an event of preliminary increase or decrease in throughput at step 60 in Fig. 9. Several possibilities exist as to how the detection is performed and, closely related therewith, as to what the event of preliminary decrease or increase in throughput is. In any case, the preliminary nature of such an event of preliminary increase or decrease in throughput is something which, if known by the client, may lead to an improved streaming behavior when compared to a case where the client is informed on the change in throughput simply at the beginning and at the end of such an event of preliminary increase or decrease in throughput. Fig. 10 seeks to illustrate the circumstance. Fig. 10 graphically illustrates the temporal variation of the throughput from server to client over the network. During a temporal interval 62, the throughput is preliminarily decreased. This is the "event of preliminary decrease in throughput". Fig. 11 substantially corresponds to the example depicted in Fig. 10 with the only difference that within the temporal interval 62, the throughput is preliminarily increased. That is, according to the preliminary nature of the preliminary decrease in throughput 64 depicted in Fig. 10 and the preliminary increase in throughput 66 as depicted in Fig. 11, the throughput before and after event 64/66 is almost the same. For instance, the throughput might be the same before and after event 64 and 66 as depicted by the solid line in Fig. 10 and 11, but it should be noted that other examples are valid as well. For example, the throughput also changes without the influence of events 64 and 66. Such a change 68 in throughput when comparing the throughput before event 64/66 and the throughput after event 64/66, i.e. 68 in Figs. 10 and 11, would be, however, considerably smaller than the decrease 70 in throughput in case of event 64, and the increase in throughput 72 in case of event 66. Figs. 10 and 11 also illustrate the point in time 74 where event 64 and 66 is detected. Although the detection could take place at the beginning of event 64/66 itself, there are many examples outlined in the following, where the event 64/66 allows for a detection in advance of event 64/66. That is, in such a case, there is a time period 76 where a network device 50 and/or client 14 is/are able to take the knowledge of preliminary increase/decrease in throughput into account in order to perform appropriate counter measures as they are set out in the following.

As shown in Fig. 9, the network device then sends, depending on the detection of the event, in step 78 a predetermined signal to client 14. Although the sending 78 may take place delayed relative to detection 60, Figs. 10 and 11 illustrate the case where the point in time 74 where events 64/66 is detected at the point in time 80 where the sending 78 is performed, are performed almost or immediately consecutively.

The "dependency" of sending 78 on the detection 60 may simply rely in the responsiveness of network device 50 to send the predetermined signal to client 14. Beyond this, however, the dependency may also affect the dependency of the content of the predetermined signal on the detection 60. For example, the predetermined signal could contain information on details regarding the time duration left to event 64/66, i.e. information on the length of time period 76, information on length of time interval 62 and/or information on the severeness of the event 64/66 itself such as information on the amount of throughput available during time interval 62 or the amount of increase 72 or decrease 70 in throughput during time interval 62.

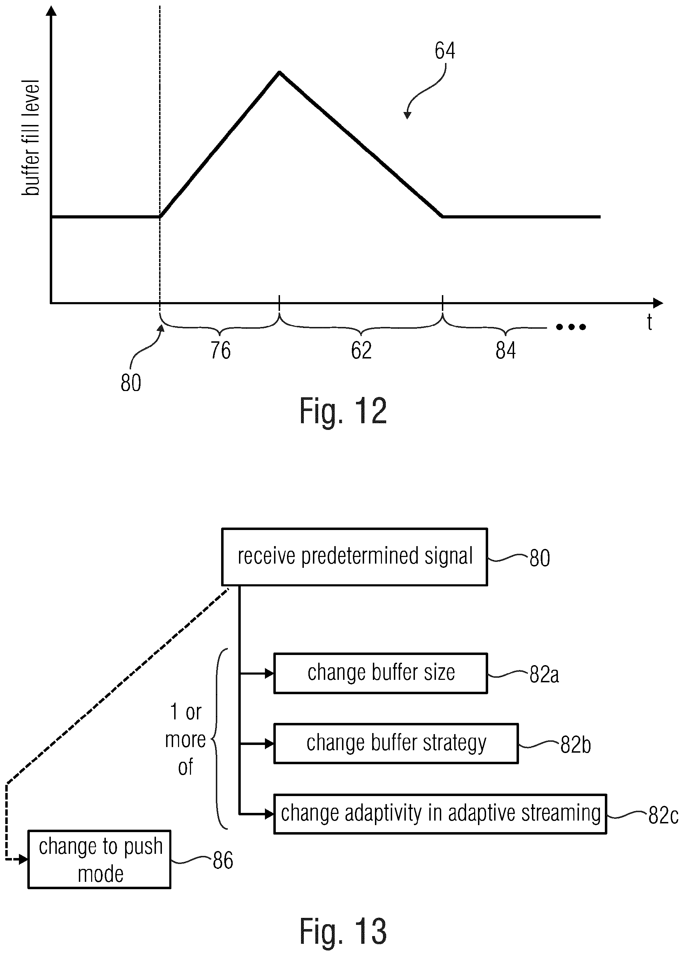

Before providing examples as to what the predetermined signal could indicate to the client and as to what kind of events 64/66 could be, Figs. 12 and 13 describe an embodiment of a client, called the streaming device 14, which would be able to take advantage of the predetermined signal.

Fig. 12 illustrates the buffer fill level 42 of the client's buffer in a very schematic manner. Fig. 12 shows a point in time 80 where client 14 receives the predetermined signal, namely, 80. It is possible that the predetermined signal sent from network device 50 to client 14 does not really inform the client on the "preliminary nature" of the event taking place within time interval 62. However, the predetermined signal triggers within client 14 measures taken by client 14, which are favorable in circumstances such as events 64 and 66. It is to be understood, however, that the predetermined signal triggering all these measures might also be advantageous in other situations and that, accordingly, the embodiments described below with respect to the streaming device or client suggest the possible measures described with respect to Fig. 13 are not restricted as far as the description with respect to the network devices concerned, which is about the detection possibilities and the sort of events. Rather, streaming devices or clients having the functionality described later on with respect to Fig. 13, namely, devices taking measures upon receipt or responsive to a respective predetermined signal, might be advantageous also in other situations and cases. In even other words, the predetermined signal sent from network device to client is not necessarily specific for events 64 and 66. Rather, the functionality to be responsive to such a predetermined signal, may be exploited by a network device sending such a predetermined signal to a client acting as described below with respect to Fig. 13 and the subsequent embodiments.

Fig. 12 shows the time period 76 preceding time interval 62. Fig. 12 exemplarily assumes that the predetermined signal 80 has been sent upon detection of an event 64, i.e. an event of preliminary decrease in throughput. In such a situation, it is clear that the buffer fill level of client 14 will decrease in time interval 62 owing to the continuous play-out. The client's buffer may, without measures taken through preceding time period 76, run the risk of depleting, i.e., a stall situation might occur. Accordingly, an advantageous reaction of client 14 upon receipt of the predetermined signal that time instant 80, would be to change the buffer strategy to the extent that the client hoards data segments of the data stream. That is, the client starts increasing the buffer levels during time period 76. In this situation, it may also be advantageous, if the client, responsive to the signal received at 80, increases the buffer size available. That is, the client might ask the underlying operating system, for instance, for allocation of additional memory space. If the streaming of the data stream uses an adaptive streaming protocol according to which the server renders available different bit rate versions or representations of the data to be streamed, it would be advantageous if the client would, alternatively or additionally, assist in increasing the buffer level during time period 76, by choosing/selecting a lower or lowest bit rate version during download in period 76. In particular, a lower bit rate version leads, when measured in play-out time, to a faster increase of the buffer level than compared to selecting a higher bit rate version. Measured in play-out time, accordingly, choosing a lower bit rate version results in the ability to bridge a longer time interval 62 of low throughput. Fig. 13 shows a corresponding mode of operation of a client or streaming device in accordance with an embodiment of the present application.

In accordance with Fig. 13, a streaming device receives at step 80 a predetermined signal from a network device such as network device 50. Depending on the predetermined signal, the streaming device at least one of changes its buffer size at step 82a, changes its buffer strategy at step 82b and/or changes its adaptivity in adaptive streaming at step 82c.

The dependency may relate to a simple responsiveness of the streaming device to the receipt of the predetermined signal. That is, the streaming device may be configured to, depending on the predetermined signal, change buffer size at step 82a. Alternatively or additionally, the streaming device may be configured to, depending on the predetermined signal, change buffer strategy at step 82b. Additionally or alternatively, the streaming device may be configured to, depending on the predetermined signal, change adaptivity in adaptive streaming at step 82c. That is, the dependency may solely rely in the fact that the receipt of the predetermined signal triggers the respective step 82a, 82b and/or 82c. To be more precise, the streaming device could be configured to, responsive to the predetermined signal or the receipt thereof at step 80, change the buffer strategy at step 82b to the extent that the buffer fill level is increased, increase the buffer size at step 82a and/or select a lower than currently selected or lowest bit rate version in adaptive streaming at step 82c. In this case, the predetermined signal would be an appropriate means for the network device to prepare an imminent event of preliminary decrease in throughput, 64, by sending this predetermined signal to the streaming device or client at step 78. It could be that another predetermined signal triggers streaming device 14 to select the higher bit rate version of higher bit rate than a currently selected bit rate version or a highest bit rate version at step 82c; it would be advantageous for network device 50 to prepare an imminent event of preliminary increase in throughput as this measure would increase the "consumption" or increase a speed of depletion of the buffer of the streaming device.

The "dependency" on the predetermined signal 80 could, however, also manifest itself in something more than just a responsiveness of performance of any of steps 82a to 82c upon the predetermined signal at step 80. As explained later on, the predetermined signal could comprise details or information, measuring an event 64/66 such as in terms of the temporal length of temporal interval 62, the temporal length of the preceding time period 76 and/or in terms of bit amount and/or bit rate downloadable during period 76 and/or 62. These details could then be used to schedule and/or adjust parameters of changing the buffer strategy at step 82b, for instance, or changing the adaptivity and adaptive streaming at step 82c, for instance.

The streaming device could be configured to, responsive to the receipt of the predetermined signal, redo the one or more changes in the one or more steps 82a to 82c performed upon receipt of the predetermined signal at step 80 at the end of period 76. For example, at the end of period 76, streaming device 14 could change its buffer strategy back again to a normal behavior or change the adaptivity in adaptive streaming at step 82c back to a normal adaptivity. Returning to a normal buffer strategy will deplete the buffer in the case where the predetermined signal 80, having been sent due to event 64 of a preliminary decrease in throughput, as the throughput is during period 62 decreased and streaming device 14 is not able to fill the buffer fast enough compared to its depletion owing to play-out. Even more favorably, the streaming device would change the buffer strategy 82b during period 62 to the extent that during this period 62, the streaming or download of further data segments of the data stream is preliminarily stopped, thereby "voluntarily" preliminarily waiving any need for allocated network resources during which period 62 there would be a shortcoming of network resources anyway. In this case, the streaming device 14 could be configured to change the buffer strategy again to return to a normal buffer strategy having been used before receiving 80 of the predetermined signal, within the period 84 succeeding period 62.

It would be even possible that the streaming device 14 would start, upon receipt of the predetermined signal at step 80, a detection process of detecting one of the start and the end of period 62 itself. For example, as soon as the throughput abruptly changes, client 14 could interpret this as the start of period 62 and as soon as the throughput abruptly races up again, this could be interpreted as a start of period 84. This detection would be appropriate to detect an event 64 of preliminary decrease in throughput, but detecting an abrupt increase followed by an abrupt decrease could be used similarly in order to detect an event 66.

As shown in Fig. 13, alternatively, i.e., alternatively to steps 82a to 82c, the client device or streaming device 14 could be configured to, depending on the predetermined signal, change between a pull and a push mode. For instance, the streaming device could, as depicted in Fig. 13, change to a push mode in step 86. Another signal could cause a change to a pull mode again. By this measure, a network device could, by sending the predetermined signal at step 78, cause a streaming device to enter a push mode so that the network device is able to bring the network device safely through the imminent event 64 of preliminary decrease in throughput, for instance, namely by increasing the buffer fill level by pushing the data stream at high throughput into the client's buffer during period 76. Afterwards, such as at the end of period 62, the network device could signal the way of another signal that streaming device 14 should revert to the pull mode, or the streaming device could detect a time to revert to pull mode again by itself, such as by detecting the end of period 76 or the end of period 62. Referring back to the description of the network device started at Fig. 9, it becomes clear that the network device could do more than just send the predetermined signal at step 78. That is, as explained above, the predetermined signal sent at step 78, could advise the streaming device to perform certain measures as they are described with respect to Fig. 13 and Fig. 12 and/or could inform the streaming device of details regarding an event 64 and/or event 66. This would then start advantageous processes at the streaming device such as any of steps 82a to 82c. However, there are also measures which could be favorably taken at the network device 50 in order to bridge the event 64/66 in a more favorable manner when seen globally, i.e. with respect to all user entities served by the network. For example, in case of the predetermined signal advising the streaming device of entering the push mode, the network device itself could "assume" the task of the buffer strategy. Even if the client device does not enter a push mode, however, network device 50 may increase the fairness and/or effectiveness in the following manner. If, for instance, the predetermined signal contained information on bit rate and/or bit amount allocated to the user entity of the streaming device or client during period 76 and/or period 62, then the network device could cause this "promise" to actually take place. If the network device resides within the resource manager of the network, network device 50 simply decides on the resource allocation correspondingly and negotiates the network resources among all served user entities correspondingly. If the network device 50 is outside the entity or resource manager responsible for finally deciding on the allocation of the network resources, then the network device 50 could negotiate network resources for the user entity on which the streaming device 14 operates, correspondingly, i.e., it could request the allocation of increased network resources during period 76, for instance, in case of event 64 of preliminary decreased throughput, for instance. The network device 50 could negotiate for no or a low amount of network resources for the client during period 62, thereby leaving network resources for others during period 62 in case of an event 64 of preliminary decrease in throughput. The network device 50 could have negotiated this allocation of network resources beforehand with the resource manager or other entity deciding on the final allocation of network resources, before sending the predetermined signal at step 78.

The above description did not go into detail as to what events could be detected at step 60 as events of preliminary increase or decrease in throughput. As the following provision of certain examples will show, the detection 60 of such an event may be based on the location of the user entity on which the respective client or streaming device operates, and/or on the network device 50 realizing that the user entity of the client has reached or entered another cell of the network, i.e. enters the reach of another base station of a network so that a handover might be imminent. In principle, detection 60 could, by way of surveillance of the client's user entity changing between the cells of a network 12 forecast that a certain handover happens or realize that the user entity is in a situation of a certain type such as being on a train or being in a car on a highway so that a major characteristic of this situation is that an event 64 or 66 is very likely to occur. For example, a train approaching a train station is very likely to end up in an event 66 since at a train stations it is very likely that there is a high troughput cell and good reception conditions, and a train leaving a train station is very likely to form an event of an imminent event 64.

The description of Fig. 9 and 13 is briefly summarized in other words.

The network device 50 could be configured to detect each, or at least one or more of the following, as an event of a preliminary decrease or increase in throughput:
an outage of a handover, namely as an event of a preliminary decrease in throughput,
the client's passing through a cell of the network, namely as an event of a preliminary decrease in throughput in case of this cell having relatively low network resource capacity compared to the cells of the network from and to which the client passes through this cell, and as an event of a preliminary increase in throughput in case of this cell having relatively high network resource capacity compared to the cells of the network from and to which the client passes through this cell,
the client's passing through a cell coverage gap of the network, i.e. a region not served by the network, namely as an event of a preliminary decrease in throughput,

An event 64/66 may also be a sequence of preliminary increases or a sequence of preliminary decreases.

The detection could be done based on the presence of client 14, or the user entity same operates on, in a certain cell of the network, a surveillance of the cells visited thereby, and/or a location of the client's user entity with the location being sampled finer granular than in cells of the network.

According embodiments, the predetermined signal may signalize:
A) an event of preliminary decrease in throughput;
B) an event of preliminary increase in throughput;
C) an event of preliminary decrease or increase in throughput and whether the event of preliminary decrease or increase in throughput is an event of preliminary decrease in throughput or an event of preliminary increase in throughput;
D) (A), (B) or (C) and a time duration of event time interval 62;
E) one of (A) to (D) and a time duration of period 76 till the event;
F) one of (A) to (E) and a throughput at which streaming to client 14 takes place, or allocated network resource amount, within period 62;
G) one of (A) to (F) and a throughput at which streaming to client 14 takes place, or allocated network resource amount, within period 76;
H) one of (A) to (G) and a throughput at which streaming to client 14 takes place, or allocated network resource amount, within period 84;
I) an advise to the client to obey a temporal play-out time to be minimally pre-buffered by the client to bridge a preliminary decrease in throughput;
J) an advise to the client to increase an amount of a downloaded and buffered portion of the data stream to bridge a preliminary throughput loss due to the event of preliminary decrease or increase in throughput;
K) an advise to the client to freeze rate adaptation in adaptively streaming the data stream from the server;
L) an advise to the client to preliminarily stop downloading the data stream from the server;
M) an advise to the client to not to select a bitrate version of a bitrate higher than a predetermined amount in adaptively streaming the data stream from the server;
O) an advise to the client to transition from a pull mode to a push mode;
P) one of (I) to (O) and an indication of a temporal length the advice is to be applied by the client;
Q) one of (I) to (P) an indication of a reward for following the advice to the client,

In the following, the various options listed above will be referred to by stating "signal (A)", "signal (B)" or the like.

As described above, the network device may cause the allocation of network resources to the user entity 24 of client 14 to correspond to any of the signaled values according to any of signals (F) to (H), by sending a request to the network 12 and sending the signal (F) to (H), respectively, depending on whether the request is granted. An increase in throughput could be attained by an increase in a number logical connections between the network 12 and a user entity 24 on which the client 14 is operating such as by carrier aggregation.

In case of the signal from the network device 50 comprising an indication of a reward according to signal (Q), the network device 50 may be configured to, if the client follows the advice in the predetermined signal, schedule a future increase of a share of network resources or a decrease in oscillation of network resources allocated to a user entity on which the client operates by accordingly negotiating network resources for the client 14. The device, in turn, may, based on the reward, decide to ignore the advice.

In case of the predetermined signal containing advice to enter push mode according to signal (O), streaming device 14 could choose whether to switch to push or not based on its buffer fill level 42. If the buffer is quite full anyway, i.e. exceeds a certain amount, client 14 could refrain from entering push mode, for instance.

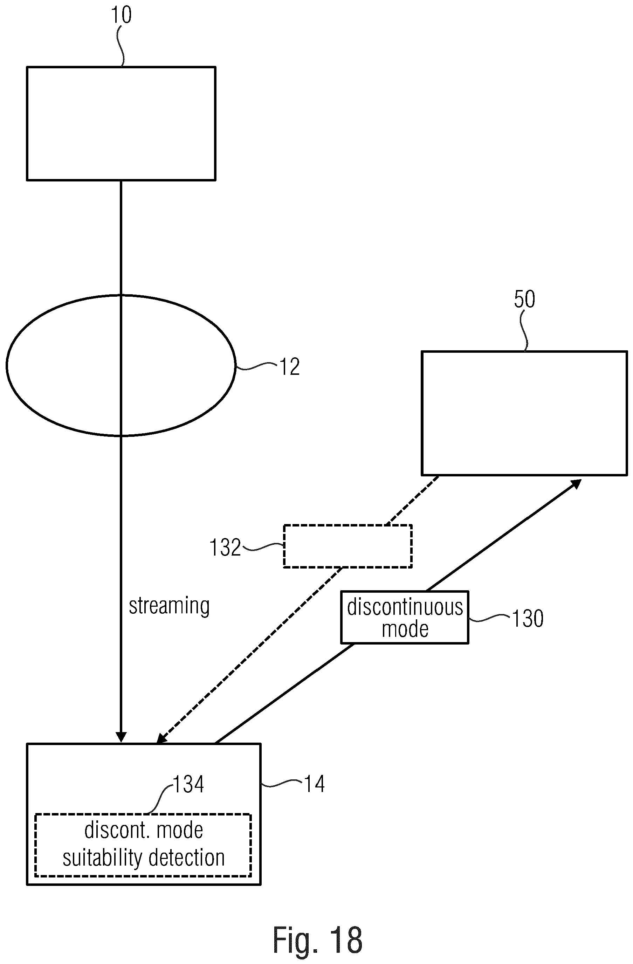

In case of the predetermined signal advising the client to transition from a pull mode to a push mode according to signal (O), the network device 50 may be configured to push the data stream to the client via the network 12 when the client 14 is in the push mode. The network device may push the data stream to the client 14 via the network 12 in a manner depending on information on a buffer fill level of the client 14 which information may be sent from client 14 to device 50 as also mentioned below with respect to Fig. 18. The network device 50 may push the data stream to a buffer at the user entity on which the client is operating, accessible by the client, and inform the client on how to redirect data stream segment requests from server addresses, as indicated in the MPD, to addresses within the buffer.

The description brought forward above was rather unspecific regarding certain situations. The following description now presents specific situations and presents, using these specific examples, specific embodiments with respect to the details which could be conveyed by way of the predetermined signal and the way network device 50 and client 14 may react.

In particular, network device 50 and client device 14 as described above with respect to Figs. 9 to 13 enable bridging of handovers efficiently which might occur if the network 12 is of a cellular network type. In such a case, handovers may occur. These handvovers may by cell-to-cell handovers or handovers between sectors of one cell, such as LTE handovers, but the term handovers as used in the present application shall also encompass inter-RAT handovers such as LTE to UMTS or vice versa. When handovers occur, there are a number of issues that need to be solved. For example, when a handover happens to a new cell, it is not clear if the resource which is granted in the first cell, i.e. the cell by the user entity on which client 14 is operating will be also guaranteed in the second cell into which the user entity is going to move. It might happen that the second cell cannot provide the same amount of resources or that it can provide more. In that case, the remaining time until handover would form an event of preliminary increase or decrease in throughput without a preceding time period 76. Secondly, there might be an outage during the handover that could drain the buffer level of the client and thus lead to an unnecessary switch. Detecting that a certain handover will happen results in, accordingly, the detection of an event 64 of preliminary decrease in throughput, namely, the outage during the handover.

In order to solve the problems associated with a handover, the predetermined signal sent in step 78 could be a method to indicate to the user the characteristics of the cell which the client switches to, as soon as being handed over. That is, the characteristics of period 62 could be indicated in the predetermined signal. The message could be either a promise that the same amount of resources, i.e., throughput will be provided, more resources will be provided or less resources, will be provided, potentially indicating the exact value that will be provided by the new cell.

Another message that could be sent in step 78 as the predetermined signal could consist of an indication that a handover is happening and how long the outage will last. This message could be extended by informing the user to download the whole video due to a long outage. Alternatively, the network could inform the user entity that an outage of a given length is happening and that a given number of resources will be made available before the handover, i.e. that a given number of bytes will be transmitted before the handover. In other words, the resources allocated to the user entity of the client during period 76 could be indicated in the message. Based on this signal, the streaming device or client could decide which representation to download depending on its buffer level, outage duration, i.e. the duration of period 62, and promised resources, i.e. the promised resources during period 76 and/or period 62. Another alternative would be that the network device informs the client to change from a pull approach to a push approach and that the network device decides and negotiates with the server 10 such as a video server, that a given amount of segments are pushed to the user.

Taking jointly into consideration certain information such as handover information and new cell resource information such as received from RAN, the network device 50 could send in step 78 as the predetermined signal a message to the client advising the client that the same should download the whole video before the handover. To this end, the streaming device or client could be configured to inform the network device 50 intermittently, periodically or on a request sent as a predetermined signal 78 beforehand, on a remaining playtime or video time yet to be streamed or downloaded from server 10. Also taking into account this remaining playtime, the network device may cause an increase of allocated network resources to the client's user entity. For instance, as the network device 50 resides outside the entity finally deciding on the resource allocation, the network device 50 could send a message to the scheduler to prioritize the UE of the client such that more resources are allocated to the user entity so that the client operating on this user entity is able to download the whole video before the handover. The network device could, as already outlined above, use a PER message in step 78 to inform the client that it can request the whole video.

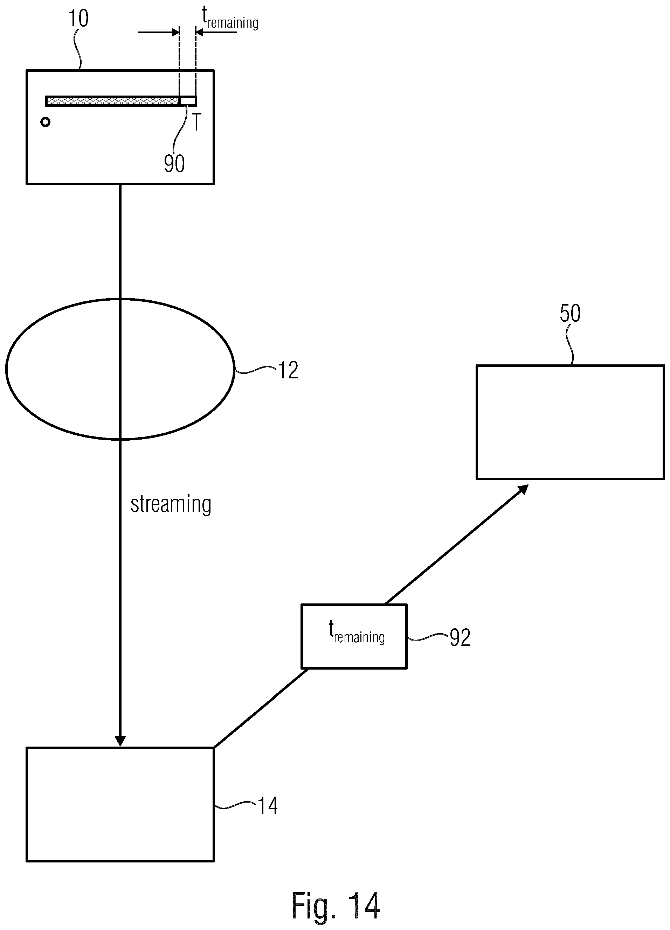

It should be noted that the latter functionality described with respect to streaming device and network device also leads to an improved or more efficient streaming when used irrespective of the other details set out above with respect to the detection of events 64/66 or irrespective of the streaming device functionality described above with respect to Fig. 13. That is, a further embodiment of the present application is a streaming device informing the network device of its remaining, not yet downloaded or streamed, play-out time till the end of the media such as audio or video, represented by the data stream streamed or downloaded from the server 10. A network device may, as just described, take this remaining time into account in order to temporally shift the allocation of network resources to the client as this shift is merely about the remaining "tail" of the overall data stream. Fig. 14 illustrates this situation. Streaming device or client 14 streams a data stream from server 10. A not yet downloaded or streamed portion of the data stream 90 is t_{remaining} long. That is, the media represented by the data stream may, for instance, be T long and there is t_{remaining} time left to the end of the data stream which portion of the data stream has not yet been streamed from server 10 to client 14. The streaming device 14 informs the network device 50 of t_{remaining}. As already indicated before, this may be done by intermittently sending a message with information on t_{remaining}, namely 92, to the network device 50, sending it periodically or sending it upon a respective request from network device 50. The network device 50 may receive message 92 and, depending on t_{remaining} participate in, or perform a, negotiation of network resources of the network 12 via which the streaming takes place. The network device 50 may send a respective message to an entity within network 12 deciding on the network resource allocation, and thus send a message to this entity asking same to prioritize the user entity of claim 14, or the network device 50 might already be part of this entity.

Additionally, or alternatively, network entity 50 might send a signal to the client device 14. This signal may advise the client 14 to rush to download the remaining portion 90. The signal may correspond to signal (J) or (Q) as far as referring back to (J) or may contain

R) an advise to the client to completely download the remaining portion of the data stream from the server.

Client 14 reacts accordingly. For example, same may have the functionality described in Fig. 13 or at least portions thereof.

For example, network device 50 may, owing to a small enough portion 90, request an allocation of increased amount of network resources for the client 14, which is increased compared to a currently allocated amount of resources, and if the request is granted by the resource allocating stage of the network, send the predetermined streaming control signal to the client advising the client, for instance, to build up its buffer fill level by completely downloading the remaining portion 90 (signal (R)).

Similar to the advantage of using the knowledge of the remaining portion 90 to download or stream from server 10, Fig. 13 shows that network device 50 and the client device 14 may be configured in a manner improving streaming efficiency, therefore streaming device 14 informs the network device 50 on a current play-out mode at which streaming device 14 plays out the streamed data stream. A user may, for instance, have the ability to switch between different play-out modes and so network device 14 plays out the data stream via its buffer 46 in a play-out mode selected by the user. These different play-out modes supported by streaming device 14 may, for instance, include a normal play-out mode at which the data stream is played out at "real time" or normal pace, and other modes, such as a slow play mode such as slow motion in case of the media represented by the downloaded or streamed data stream being a video. A further mode may be a fast play-out mode, such as fast forward or fast reboot or a pause mode. While these play-out modes have an influence on the speed at which buffer 46 is depleted: in case of the pause mode, for instance, the buffer 46 is not emptied at all. In case of a normal play-out mode the buffer 46 is emptied at normal pace or normal speed and in case of a slow play mode, for instance, the buffer 46 is emptied slowly. In case of a fast forward mode, the buffer 46 might be emptied fast. The client may send a message or signal 100 to the network device 50 which informs the latter on the currently selected play-out mode and the network device 50 may use this information in a manner similar to the description of Fig. 14. That is, the network device 50 may use this information in participating in, or even performing, the negotiation of network resources of network 12 via which the data stream is streamed from server 10.

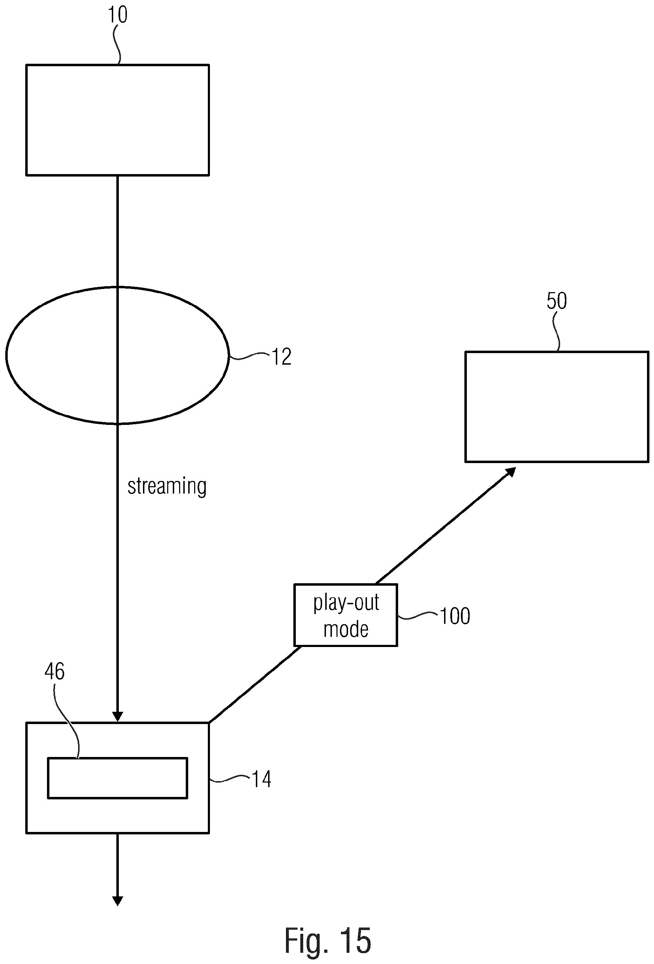

Network device 50 of Figs. 14 and 15 may also be configured to send predetermined signals to other user entities than the one on which the client 14 operates which sends the respective message 90 or 100. For instance, such predetermined signals to other clients could seek to exploit a situation where the originator of the message empties its buffer 46 slowly or even stops emptying it, or assists in increasing a throughput for client 14 in case the same indicates being in a fast play-out mode.

Messages 100 could also include information about other play-out status such as a trick mode.

It has already been described above that the network device could push the data stream to the client. In such a case, it could be favorable if the streaming device or client informs the network device about the storage capabilities. When a push action is considered, it is important to be aware of how much space the user has available for storing the segments before playback and removal, e.g. in an internal cache. Such a message would be sent back to the network or server so that the amount of segments can be computed (or alternatively the whole movie) that can be transmitted to the user without the UE having requested them. In such circumstances, a method to the client should be conveyed that informs the client about a redirection of the not yet issued segments so that the client can retrieve the segments instead of from the original location using the URL and the MPD from a different location, e.g. the internal cache.

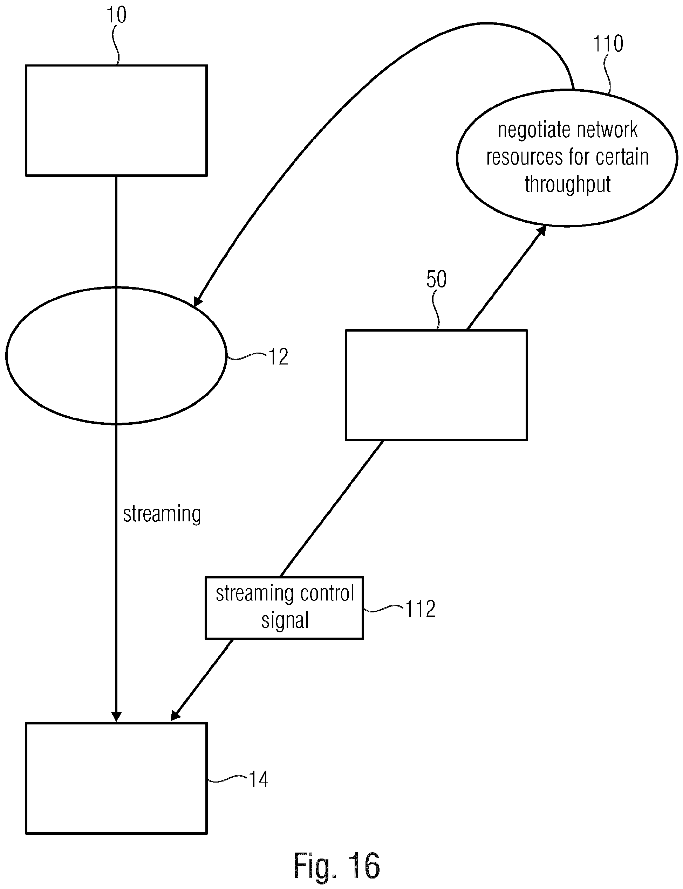

Another embodiment for network device 50 and streaming device 14 is described with respect to Fig. 16. Again, the network device and the streaming device of Fig. 16 may or may not have any of the functionality as described with respect to Figs. 9 to 15. In accordance with the aspect of Fig. 16, network assisted throughput control is used to render more efficient network-based streaming. A promise is made to the user that some resources are made available to it so that no throughput estimation is necessary. The network could inform the user about the exact throughput level at any time and thus, the client could just use this information for the adaption algorithm. Alternatively, the network could inform the user about changes in the throughput and send advices to switch up and switch down to another representation. These switch instructions could respond to one or more level switches (one quality or more qualities up/down). In addition, if no big changes are and only temporary variations happen the network could inform the client not to do any switch and stay in the selected representation, since, e.g., the resources are only unavailable for a short time.

Accordingly, Fig. 16 shows that network device 50 negotiates 110 network resources for a certain throughput, i.e., negotiate resources for client or streaming device 14 so that the negotiated network resources suffice for streaming the streaming the data stream from server 10 at this throughput. As the network device 50 may reside or be embedded within network 12, this negotiation 110 may lead to a final decision on the allocated network resources for all served user entities including the user entity on which client 14 operates. Alternatively, network device 50 is not the final decision maker with respect to the allocation, but nevertheless negotiates the network resources for client 14 by way of respective requests and receiving the final decision made for client 14. Network device 50 then sends to the client 14 a predetermined streaming control signal 112 depending on the throughput. For example, signal 112 could indicate the throughput to which the negotiated network resources correspond and that they suffice to achieve the throughput. The signal could indicate the throughput in a manner so that retransmissions of incorrectly transmitted packets into which data stream 12 is packetized is taken into account. In any case, the streaming device or client 14 could take signal 112 as one parameter, or even the only parameter, in performing, for instance, the adaptation in adaptive streaming, i.e. in performing the bit rate version selection among the various bit rate version which might be available at server 10. Signal 112 may, alternatively, not indicate the throughput, but indicate bit rate version to be switched to by client 14, i.e., could directly indicate to client 14 as to which bit rate version to switch to in adaptively streaming data stream from server 10. To this end, the network device 50 might have requested and received the media presentation description from either one of server 10 directly or streaming device 14. Streaming control signal 112 may indicate the throughput or the bit rate version to be used by client 14 absolutely or relatively to the throughput/bit rate version indicated previously.

Responsive to the streaming control signal 112, streaming device 14 switches up or switches down between the various bit rate versions offered at server 10.

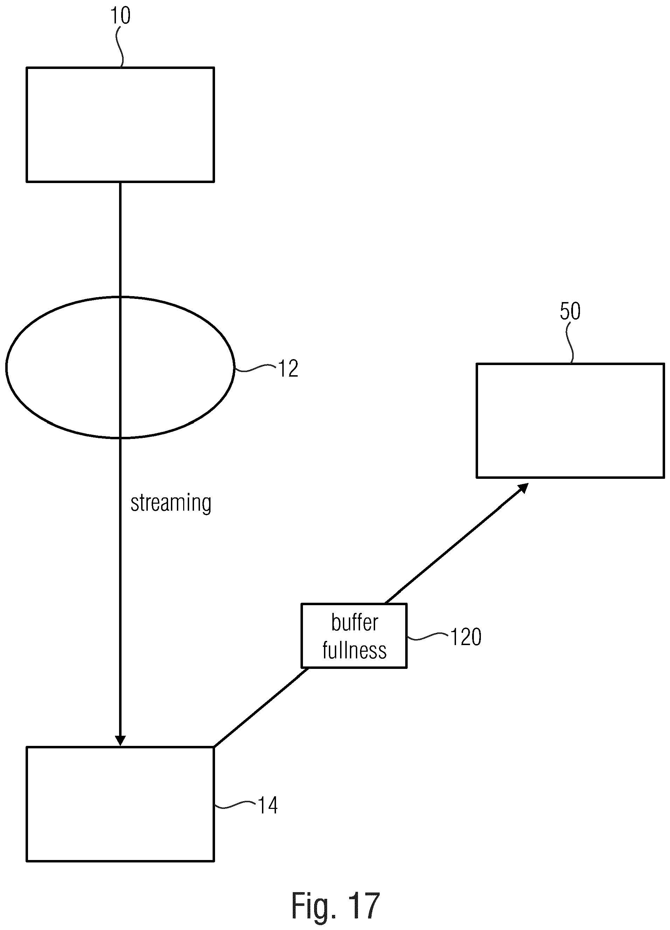

Another scenario, offering improved efficiency in network-based streaming, results as the network decides, based on some other services, that might have a high priority and might last for a short time period, to stop temporarily to assign resources to a given user and assign the resources to other users instead. Such an action could be taken especially if the client informs the network about its buffer fullness and with that knowledge the network would be sure that no playback interruption would occur at the client. Fig. 17 illustrates a network device 50 taking advantage of such a signal 120 indicating a buffer fullness of client or streaming device 14. The buffer fullness, thus indicated in signal 120, could indicate either the aforementioned fill level, i.e., the already downloaded and buffered portion of the data stream ready for play-out, or the amount of buffer space left for buffering further portions of the data stream, i.e. the buffer size 46 minus the fill level 42. Theoretically, information 120 could indicate both values or could indicate the buffer fill level 42 along with the bugger size 46. As already explained above with respect to all the other embodiments, the network device 50 could use this information in order to at least partially participate in, or perform, the negotiation of network resources for client 14 depending on the buffer fullness 120. The buffer fill level could, for instance, be indicated in signal 120 measured in play-out time. If the play-out time for client 14 is greater than the predetermined threshold, for instance, network device 50 may negotiate less network resources for client 14 than compared to a buffer fill level indicated in signal 120 which does not exceed this threshold. Additionally or alternatively, network device 50 may send the signal to client 14 where the signal corresponding to the predetermined signal discussed above with respect to Fig. 13 or discussed with respect to Fig. 16 in that the signals sent by network device 50 control the buffer strategy and/or the bit rate adaptivity in adaptive streaming of client 14. Client 14 could, accordingly, beyond the fact of sending out the buffer fullness information 120 operate as described with respect to Figs. 9 to 16 individually or in combination. The sending out of the buffer fullness 120 to the network device 50 could be done intermittently, periodically, or upon a respective request sent by the network device 50. In many of the above-discussed embodiments, the network device 50 could send out a respective signal which tells the client to hold back and stop issuing segment requests for a while and resume requesting segments of the data stream in a point in time in the future. For example, the predetermined signal discussed above could advise the streaming device 14 to stop downloading the data stream for a while. In other words, network device 50 could send the predetermined streaming control signal such that the predetermined streaming control signal advices the client 14 to interrupt further streaming the data stream according to signal (P) relating to (L), if the buffer fullness indicates a high buffer fill level and the network device is additionally informed on a high data traffic over the network 12 by the network 12.

Under some knowledge the UE would be aware that the only possibility to have a continuous playback is if the whole video or large parts thereof have to be transmitted in a discontinuous manner. An example of such a use case is when the receiver or UE sits in a train and only high connectivity is available at the stops. A message is the useful that goes from the client to the network device that informs the network device about the willingness of the client to receive the whole video or a large part thereof.

Such knowledge at the user can be based on some network information provided by the network, such as when dual connectivity is available, a millimeter wave channel is in use, or some kind of carrier aggregation is used. The network could inform the client about the capability of sending a lot of resources for short period of time. Alternatively, if dual connectivity is available, a message might be sent from the network to the client which informs the client or UE about using an interface for control, connecting to the server, and the other one for transmitting a high portion of the video or the whole video.

This aspect is depicted in Fig. 18. Again, the functionality of the network device 50 and the functionality described with respect to the data stream 14 is, according to Fig. 18, independent from the description brought forward above with respect to Figs. 9 to 17 although some functionalities might optionally be adopted by network device 50 and/or client 14. The client 14 streams the data stream from server 10 via network 12 and sends the discontinuous streaming mode indication signal 130 to network device 50. Different possibilities exist as to when the client device 14 sends out signal 130. For instance, the client 14 could perform this responsive to a receipt of a signal 132 sent from the network device 50 to client 14. The signal 132 would indicate to client 14 a discontinuous transmission or streaming mode would be favorable. Another possibility would be that client 14 detects the suitability of entering the discontinuous streaming mode by other means. Such a detection 134 could, for instance, involve the reception of a signal from another entity than network device 50 such as, for example, from the application 28, the user of the user entity 24, or on the basis of an inspection of a location of the client 14 or the user entity on which client 14 operates, itself. That is, the streaming device 14 of Fig. 18 supports a discontinuous streaming mode according to which streaming device 14 uses, for instance, a different buffering strategy when being in a discontinuous streaming mode when compared to not being at a discontinuous streaming mode, for instance. For example, when being at a discontinuous streaming mode, client 14 maintains a higher buffer fill level in its buffer when compared to not being at a discontinuous streaming mode. Beyond this, client 14 could increase the buffer fill level. It might also be that client 14 varies the bit rate version of representation at which the data stream is streamed from server 10 less frequently than when compared to not being in the discontinuous streaming mode.

The network device 50, in turn, could, upon receipt of signal 130, participate in, or perform a negation of network resources for the client 14 in a manner at least depending on client 14 being in the discontinuous streaming mode or not as indicated by signal 130.

That is, the network device 50 receives from client 14 a signal 130 indicating the client's entering a discontinuous streaming mode, and negotiates network resources for the client in a manner at least depending on the client being in, or not being in, the discontinuous streaming mode. This may be done in a manner so that a variation of network resources allocated to the client depending on a current demand for network resources is more extreme if the client is in the discontinuous streaming mode, than compared to a case of the client not being in the discontinuous streaming mode. As described before with respect to Fig. 9, network device 50 may detect an event of a preliminary decrease in throughput at which a client adaptively streams a data stream from a server via a network, and if the client is in the discontinuous streaming mode, negotiate network resources for the client ahead of the event of a preliminary decrease in throughput in a manner so that an amount of network resources allocated to the client ahead of the event of a preliminary decrease in throughput is increased compared to a case of the client not being in the discontinuous streaming mode. Further, if the client is in the discontinuous streaming mode, network resources for the client during the event of a preliminary decrease in throughput may be negotiated in a manner so that an amount of network resources allocated to the client during the event of a preliminary decrease in throughput is decreased compared to a case of the client not being in the discontinuous streaming mode. Similarly, the network device, upon detecting an event of a preliminary increase in throughput at which a client adaptively streams a data stream from a server via a network, may, if the client being is in the discontinuous streaming mode, negotiate network resources for the client during the event of a preliminary increase in throughput in a manner so that an amount of network resources allocated to the client during the event of a preliminary increase in throughput is increased compared to a case of the client not being in the discontinuous streaming mode. The network device may inform the client on changes in an amount of negotiated network resources for the client. As far as the client or streaming device is concerned, same is configured to use, when being in a discontinuous streaming mode, a larger buffer for buffering the data stream and/or a buffer strategy resulting in a higher buffer fill level, than compared to not being in the discontinuous streaming mode, and inform the network device about being in the discontinuous streaming mode.

For all predetermined signals and messages discussed herein before and later on, it should be noted that the network device could inform the client that any of these messages are valid for a given period of time only. An example would be the network device telling the client to take the whole video at a given position in time.

In another scenario, with some knowledge of the UE's geographical location and history of network conditions on that location, e.g. experienced by other UEs that were present on this location within a given time period, the UE could be made aware that a continuous playback is only possible if the whole video or a large part thereof is transmitted in a discontinuous manner. History of network conditions, e.g. average past throughput on that certain location could either be stored in the base station or could be shared among UEs through a device-to-device (D2D) communication interface. An example of such a case is that when the receiver sits on a car and travels through a series of tunnels where the signal reception is worse inside the tunnels, and only high connectivity is available between the tunnels. UE, having been made aware of the varying signal reception conditions through a PER message, can send a message to the network/server to inform the client about its willingness to receive the whole video or a large part thereof. This had been described with respect to Fig. 18.

In another scenario, an intelligent-client may keep the statistics of its "favorite" contents, e.g. based on the frequency of recent requests in a given time period. In case of a handover, UE, having obtained the message from the network that a handover is happening (defined above) and another message (defined above) specifying how long the outage will last, may send a message to a network to pre-fetch a certain amount of such content depending on the length of the outage and store it in the internal cache of the UE.

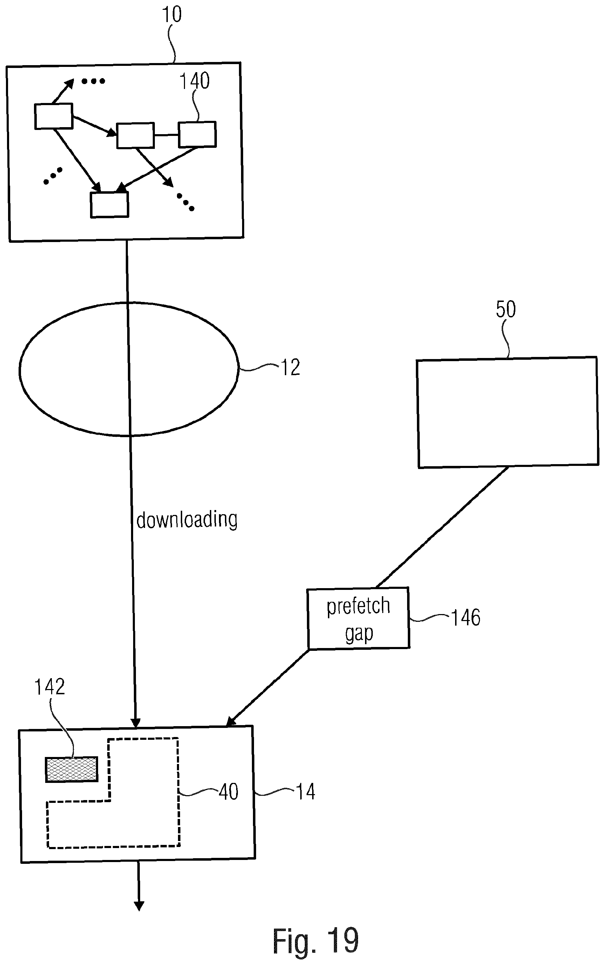

Fig. 19 shows, for instance, a device for downloading data items selected by a user input from a server 10. The data items 140 are interlinked to each other via user-selectable links. The data items might, for instance, be media content, such as webpages, each data item having an address so that other data items may point, be linked to, this data item by using its address. A currently selected data item 142 that client 14 has associated therewith a kind of set of data items likely to be visited next by the user, mainly the set comprising those data items either directly linked to the currently presented data item 142 or being linked to this data item 142 via a low number of intermediary data items 140. Device 14 could, depending on the location 144 pre-fetch certain data items to be buffered in buffer 40. In case of Fig. 19, however, device 14 acts differently in pre-fetching data items so as to be buffered in buffer 40. In particular, device 14 is responsive to a signal 146 sent from network device 50 to device 14. This signal 146 informs device 14 of an imminent pre-fetch gap, i.e. an imminent difficulty in pre-fetching data items from server 10. Accordingly, in order to decrease the likelihood that the user visits some data item next to the currently presented data item 142 which is not yet pre-fetched and buffered in buffer 40, device 14 reacts to signal 146 by preliminarily increasing the amount of data items pre-fetched and buffered, i.e. increases the set of pre-fetched and buffered data items likely to be visited next by the user. The selection of this set of pre-fetched and buffered data items could be controlled by location information 144.

With respect to the above-outlined embodiments of Figs. 9 to 19, it should be noted that it is true for all these embodiments that the network device 50 may reside in the UE 24, embedded into the network 12 or reside even elsewhere, such as in server 10. This concept allows the network device to cooperate with many types of networks. That is, the network device functionality becomes transferable onto a higher number of network environments with, consequently, providing the advantageous effects set out above with respect to a higher number of scenarios.

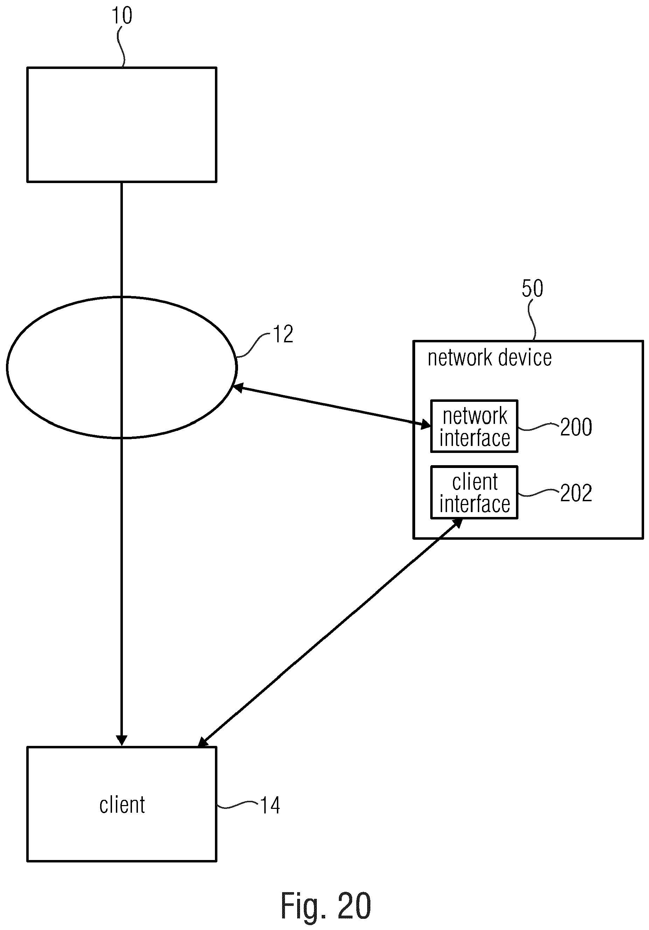

The following description of an embodiment, thus provides an embodiment for a network device 50, which is able to gain the advantages of taking into account in streaming or downloading data over a network both, network-related data as well as client-related data. The network device of the embodiment depicted in Fig. 20 may or may not be embodied in accordance with one or more of the embodiments described above with respect to Figs. 9 to 19 and is an entity beyond download device (download may be streaming or not) and network. As is true with all the other embodiments described before, which may also be combined with any of the other embodiments described above, the network device 50 shown in Fig. 20 may, thus, be configured to act in a manner described before, but another functionality is imaginable as well.

Fig. 20 focuses on the fact that network device 50 comprises two interfaces, namely an interface for communicating with a network 12 via which client 14 streams or downloads data from server 10, namely network interface 200, and a client interface 202 for communicating with client 14.

The network device 50 is configured to, using interfaces 200 and 202, gain knowledge about an association between an IP address of client 14 and an address via which network 12 addresses the user entity 24 from which client 14 operates. By this measure, network device 50 is able to specifically obtain network-related information from network 12, namely network-related information with respect to network resources via which the data is downloaded or streamed by client 14 from server 10, and to influence the network resource allocation process. Via interface 200, network device 50 is also, as described above, able to influence the scheduling of network resources with respect to client 14. Via client interface 202, network device 50 is able to communicate with client 14, also in a manner exemplarily described above with respect to Figs. 9 to 19. Specific examples for fractions of a protocol are described below.

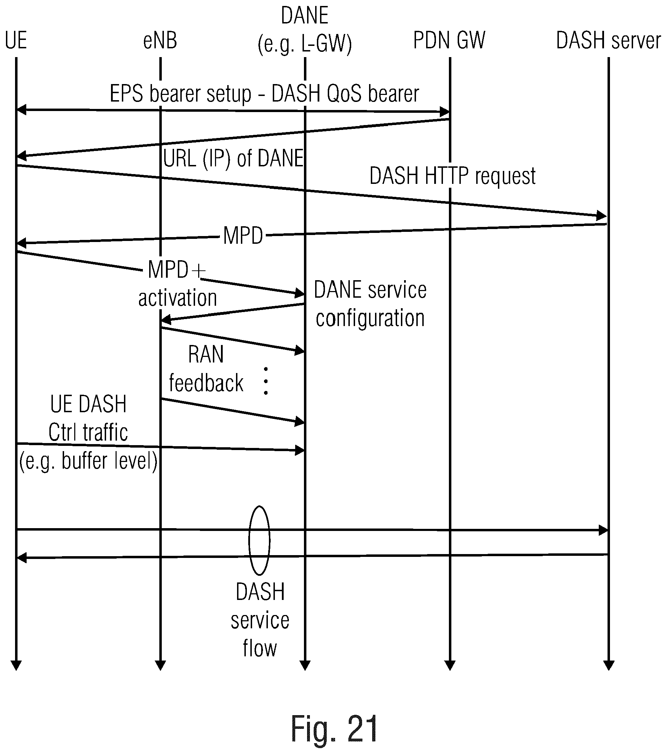

Fig. 21, for instance, shows a fraction of a protocol at the beginning of a streaming procedure. Fig. 21 assumes that the download session is streaming as it was the case with Fig. 9 to 18, but download of items as it was the case with Fig. 19, may be used as well. Further Fig, 21 assumes that the server/client streaming protocol is DASH, but another protocol may be used as well. The network is assumed to comprise a PDN (packet data network) gateway which belongs to the afore-mentioned core network and a base station (eNB). Optionally, it might be that the DANE 50 is connected via local IP access such as LlPA to the eNB of the network, and other RAN entities, e.g. core network, and that DANE 50 may be part of the operator network and may have access to the core network via local gateway (L-GW).

The client 14, which runs on a UE 24, sets up a bearer connection with a PDN (packet data network) gateway to start the session. During the bearer setup, the PDN gateway is informed by the client 14 of the IP address of client 14. The PDN gateway uses this IP address in order to send back to the client the IP address of network device 50, i.e. the DANE. This may be done by a LIPA functionality by way of an HTTP message to client 14. The request for the MPD is then actually sent over the bearer connection from client 14 to the server 10 whereupon the server 10 sends back the MPD to client 14. This communication takes place over HTTP as is true with all other server/client communication.

Client 14 then, having been informed of the IP address of network device 50, sends to the network device 50, via client interface 202, information on the MPD such as a fraction thereof or the whole MPD itself or something derived therefrom. The contacting the DANE 50 by the client is also a kind of activation of the service provided by the network device 50, namely the network-based information guidance for a more efficient streaming, which may follow one of the above-outlined embodiments as already said with respect to Fig. 20, but which may also alternatively be configured differently. From that time on, DANE knows about the IP address of the client 14. DANE may use this to differentiate between network related information relating to client 14 from network information not relating to client 14 such as network information relating to other user entities than the one 24 on which the client 14 operates. The differentiation may involve eNB or DANE deriving a network identifier for the bearer connection for the client's streaming. Then the DANE 50 communicates with eNB and DASH client to achieve a more efficient streaming which, in turn, is illustrated to occur at the end between server and client although the communication of network device with eNB may also occurs during streaming.

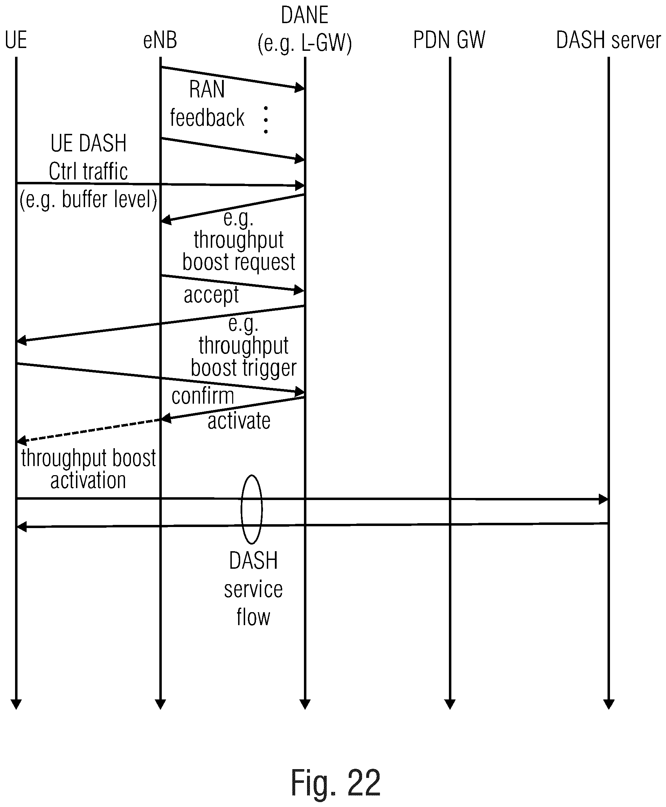

Fig. 22 illustrates another example for a protocol fraction. The assumptions may be as discussed above. Here, DANE 50 causes a throughput boost activation. The eNB can perform throughput boost by scheduling more resources on the same component carrier, via carrier aggregation or by using dual connectivity (NR). In particular, Fig. 22 is an example where the network device 50 obtains from the streaming device download related information such as a buffer level and from the network device network-related information. At a opportune occasion, such as an immanent throughput decrease, the DANE 50 decides to install a throughput boost to fill-up the client's buffer as a preparation for the subsequent throughput decrease. Thus, DANE asks the network and the streaming device whether they agree on such throughput boost whereupon, taking into account current buffer level messages from client 14, DANE 50 activates the boost by instructing the eNB accordingly and informing, optionally, the client on the actual activation.

Thus, according to Fig. 20 to 22, network device 50 comprises a first interface 202 configured to communicate with a client 14 which downloads data from a server 10 via a network, and a second interface 200 configured to communicate with the network. The network device 50 may send HTTP messages for communication with the client 14 over the first interface 202 such as, at least partially, SAND messages incase of the client being a DASH client. The network device 50 may influence, over the first interface 202, a mode of operation of client 14 with respect to the downloading the data from the server. To this end, the network may send to the client any of the above mentioned signals (A) to (R), for instance. Alternatively, the influencing may involve network device 50 sending to client 14 signals 146 or 112. The network device may do the influencing of the client 14 depending on network information relating to the download of the data from the server via the network to the client, which the network device 50 gains over the second interface 200. Such network information pertains, for example, to information of imminent handovers, data traffic situation, allocated resources, confirmation to arrange for a throughput boost or the like. Additionally or alternatively, the network device 50 may influence, over the second interface 200, a network resource allocation of the network 12 with respect to the downloading the data from the server 10 to the client 14 depending on download information relating to the download of the data from the server 10 via the network 12 to the client 14, and to gain the download information from the client. The download information may, for instance be information on a buffer level, or information on a buffer emptying speed, namely a play-out mode, as discussed above. More specifically, it may be information like signals 92, 100, or 120, but is not restricted thereto. The influencing of the network may include an arrangement of a boost or any negotiation of network resources for the client at the network. Generally, the network device 50 uses the first and second interfaces 200 and 202 to improve the download of the data from the server to the client over the network upon being contacted by the client over the first interface 202 using an IP address of the network device 50 which the client 14 has been provided with by the network (PDN GW) when setting-up the bearer. The network device 50 gains from a request via which the network device is contacted by the client, the IP address of the client 14 and may use this IP address, over the second interface 200, to obtain from the network 12 an identifier for differentiating network information of the network relating to network resources contributing to the download of the data from the server via the network to the client from other network information of the network relating to network resources not contributing to the download of the data from the server via the network to the client. Alternatively, the network device 50 does not use the just-mentioned identifier itself, but the network 12 does this and associates the identifier to the client's 14 IP address, As mentioned before, the client may be a streaming client, but alternatively, the data downloaded is not streamed.

The client device 14 performs a bearer set-up with the network to commence the download, receive from the network 12, responsive to the bearer set-up, an IP address of a network device; and uses the IP address, to obtain from the network device 50 network information relating to the download of the data from the server via the network, und adapts the download depending on the network information, and/or sends to the network device download information relating to a buffering of, and/or a play-out of, the data from the server via the network. This may involve any of the embodiments discussed above with respect to Fig. 9 to 19, but may also be done differently. The client device 50 may activate the network device by sending an activation request to the IP address. Client 50 may request an MPD from the server and provide the network device with information derived from the MPD or a copy of at least a portion of the MPD. The client 14 receives from the network device 50 network information relating to the download of the data from the server via the network, und adapts the download depending on the network information, and/or the client 14 sends to the network device download information relating to a buffering of, and/or a play-out of, the data from the server via the network, so as to be favourably used by to the network device.

As to interface 200, it should be noted that, for communication, a proprietary MRI interface could be used.

The media-RAN interface (MRI) could specify the control interface 200 between the DASH-assisting network element (DANE) and the network which might be a radio access network (RAN). This allows a joint cross-layer optimization of application and transport layer.

The MRI may be a bidirectional interface with communication from DANE to RAN, and from RAN to DANE.

As to the information exchanged between DANE and RAN it may be said that the DANE may provide UE context information to the RAN such as a unique identifier, such that a RAN UE can be mapped to the DANE service flow (e.g. video application etc.). The RAN may provide UE context information to the DANE, such that a UE can be uniquely identified as a registered RAN UE. The information provided by RAN may be the MME UE S1AP ID.

The DANE may provide buffer level of a service queue for a user queried by the RAN, such that the RAN interface (with access to a resource scheduler in the eNB) can decide to trigger a service boost on the radio interface. A service boost can be realized using:
- More resources on the radio network, in case there are free radio resources available
- By carrier aggregation, e.g. aggregating more frequency bands depending on available carriers and UE capabilities
- Aggregation through dual connectivity, e.g. if connected to a 5G base station, and the UE supports this new 5G interface, the base station may decide to allow a service boost over this new carrier, while keeping control traffic on the legacy radio network. The new carrier (5G) may be a mmWave link (e.g. operating at 28 GHz or 60 GHz) supporting a very high bandwidth (e.g. > 250 MHz up to 1 or 2 GHz) for a short period. This allows a service or capacity boost for a certain time period and thus allows a pre-scheduled download of a particular DANE service (e.g. update of video portfolio on a device).

The RAN may indicate a capacity boost to the DANE by signaling scheduling information including a date/timestamp and a data rate or data volume to the DANE. This allows a prescheduled preparation for the DANE or pre-selection of possible services which can be provided to the UE, e.g. only a certain video service (quality and type) can be transmitted in this given time and data volume.

The RAN may indicate an overload condition (e.g. no additional resources are available or can be aggregated) such that the DANE can adapt and scale down the service to provide smaller bitrates to the RAN.

The RAN may indicate a handover condition (HO), which allows the RAN to pre-buffer data packets provided by the DANE and transmit this via X2 interface to the neighboring base station of continuous service delivery.

With respect to Fig. 20 to 22, it should be noted that there are alternatives to the IP address of the network device being sent from the network 12 to the client 14 responsive to a bearer set-up between the client and the network. For example, the IP address of the network device could alternatively be sent from the network 12 to the client 14 within the MPD. The network 12 such as the PDN GW, would intercept the MPD in its way from server 10 to client 14 and enter the IP address of the network device into the MPD such as at a place holder or template for IP the address of DANE 50. Even alternatively, the sever 10 could inform the client 10 on the IP address of DANE 50 by way of the MPD itself.

An advantage of the configuration of Fig. 20 t0 22 is also that the DANE functionality may be offered as a separate service, separate to the DASH services. The functionality may be offered to certain clients 14 which have paid for this service, for instance.

All the defined messages above can be instantiated as SAND (ISO/IEC 23009-5) messages at application layer or else lower layer messages suggest RRC messages as defined by 3GPP.

In the following, additional embodiments and aspects of the invention will be described which can be used individually or in combination with any of the features and functionalities and details described herein.

Embodiment 1: Network device configured to
detect an event of a preliminary decrease or increase in throughput at which a client streams a data stream from a server via a network; and
depending on the detecting the event of preliminary decrease or increase in throughput, sending to the client a predetermined signal.

Embodiment 2: Network device according to embodiment 1, being a user entity having the client operating thereon.

Embodiment 3: Network device according to embodiment 1, embedded into the network.

Embodiment 4: Network device according to embodiment 1, embedded into the server.

Embodiment 5: Network device according to any of embodiments 1 to 4, wherein
the network device is configured to detect a handover as an event of a preliminary decrease or increase in throughput, and/or
the network device is configured to detect a passing through a cell of the network as an event of a preliminary decrease or increase in throughput, and/or
the network device is configured to detect a passing through a cell coverage gap of the network as an event of a preliminary decrease or increase in throughput, and/or
the network device is configured to detect an event of a preliminary decrease or increase in throughput upon the user entity on which the client operates, entering a predetermined location, and/or
the network device is configured to detect an event of a preliminary decrease or increase in throughput upon the user entity on which the client operates, moving on predetermined path such as a highway or rail way.

Embodiment 6: Network device according to any of embodiments 1 to 5, wherein the network device is configured such that the predetermined signal comprises
an information measuring the event of preliminary decrease or increase in throughput.

Embodiment 7: Network device according to any of embodiments 1 to 6, wherein the network device is configured such that the predetermined signal comprises
an information measuring the event of preliminary decrease or increase in throughput in time and/or in streamed data amount.

Embodiment 8: Network device according to any of embodiments 6 or 7, configured to cause an allocation of network resources to a user entity on which the client operates, during the event of preliminary decrease or increase in throughput, so that the network resources allocated comply with the information.

Embodiment 9: Network device according to embodiment 8, configured to cause the allocation of network resources to the user entity during the event of preliminary decrease or increase in throughput by sending a request to the network and sending the predetermined signal comprising the information depending on whether the request is granted.

Embodiment 10: Network device according to any of embodiments 1 to 9, wherein the network device is configured such that the predetermined signal comprises
an information measuring a temporal phase until the event of preliminary decrease or increase in throughput, in time and/or streamed data amount.

Embodiment 11: Network device according to any of embodiments 10, configured to cause an allocation of network resources to a user entity on which the client operates, during the temporal phase until the event of preliminary decrease or increase in throughput, so that the network resources allocated comply with to the information.

Embodiment 12: Network device according to embodiment 11, configured to cause the allocation of network resources to the user entity during the temporal phase until the event of preliminary decrease or increase in throughput by sending a request to the network and sending the predetermined signal comprising the information depending on whether the request is granted.

Embodiment 13: Network device according to embodiment 11, configured to
increase a number logical connections between the network and a user entity on which the client is operating during the temporal phase until the event of preliminary decrease or increase in throughput.

Embodiment 14: Network device according to embodiment 13, configured to
use one logical connection for downloading segments of the data stream and another logical connection for messages from client to server to request the segments.

Embodiment 15: Network device according to any of embodiments 1 to 14, wherein the predetermined signal indicates a temporal play-out time to be minimally pre-buffered by the client to bridge a preliminary decrease in throughput.

Embodiment 16: Network device according to any of embodiments 1 to 15, wherein the event of preliminary decrease or increase in throughput is an even of preliminary decrease in throughput, and the network device is configured such that the predetermined signal advises the client to increase an amount of a downloaded and buffered portion of the data stream to bridge a preliminary throughput loss due to the event of preliminary decrease or increase in throughput.

Embodiment 17: Network device according to any of embodiments 1 to 16, wherein the network device is configured such that the predetermined signal advises the client to commence full download and buffering of the data stream.

Embodiment 18: Network device according to any of embodiments 1 to 17, wherein the network device is configured such that the predetermined signal advises the client to freeze rate adaptation in adaptively streaming the data stream from the server.

Embodiment 19: Network device according to any of embodiments 1 to 17, wherein the network device is configured such that the predetermined signal advises the client to preliminarily stop downloading the data stream from the server.

Embodiment 20: Network device according to any of embodiments 17 to 19, wherein the network device is configured to depending on a receipt of an acknowledgment from the client to accept the advice in the predetermined signal, modify, in a predetermined manner, an allocation of network resources to the client.

Embodiment 21: Network device according to embodiment 20, wherein the network device is configured to depending on a receipt of an acknowledgment from the client to accept the advice in the predetermined signal, modify, in a predetermined manner, an allocation of network resources to the client.

Embodiment 22: Network device according to any of embodiments 17 to 21, wherein the network device is configured such that the predetermined signal comprises an indication of a reward for following the advice to the client.

Embodiment 23: Network device according to any of embodiments 17 to 22, wherein the network device is configured to, if the client follows the advice in the predetermined signal or depending on an acknowledgment from the client to accept the advice in the predetermined signal, schedule a future increase of a share of network resources or a decrease in oscillation of network resources allocated to a user entity on which the client operates.

Embodiment 24: Network device according to any of embodiments 1 to 19, wherein the predetermined signal indicates a maximum quality level/bitrate to be preliminarily not exceeded by a representation at which the client adaptively streams media from the server.

Embodiment 25: Network device according to any of embodiments 1 to 24, wherein the network device is configured such that the predetermined signal comprises
an information measuring a throughput for the client subsequent to the event of preliminary decrease or increase in throughput.

Embodiment 26: Network device according to any of embodiments 1 to 25, configured to cause an allocation of network resources to a user entity on which the clients operates, subsequent to the event of preliminary decrease or increase in throughput so that the throughput for the client is as measured by the information in the predetermined signal.

Embodiment 27: Network device according to embodiment 26, configured to cause the allocation of network resources to the user entity subsequent to the event of preliminary decrease or increase in throughput by sending a request to the network and sending the predetermined signal comprising the information measuring the throughput for the client subsequent to the event of preliminary decrease or increase in throughput depending on whether the request is granted.

Embodiment 28: Network device according to any of embodiments 1 to 27, configured such that the predetermined signal advises the client to transition from a pull mode to a push mode to adaptively stream the data stream from the server and the network device is configured to push the data stream to the client via the network when the client is in the push mode.

Embodiment 29: Network device according to embodiment 28, wherein the network device is configured to push the data stream to the client via the network in a manner depending on information on a buffer fill level of the client.

Embodiment 30: Network device according to embodiment 29, wherein the network device is configured to push the data stream to a buffer at the user entity on which the client is operating, accessible by the client, and inform the client on how to redirect data stream segment requests from server addresses to addresses within the buffer.

Embodiment 31: Device for streaming a data stream from a server via a network, the device configured to
receive a predetermined signal from a network device; and
depending on the receiving of the predetermined signal, change a buffering strategy; and/or depending on the receiving of the predetermined signal, change a size of a buffer for buffering the data stream; and/or
depending on the receiving of the predetermined signal, change a strategy of selecting among various bitrate versions at which data represented by the data stream, is available at the server, so as to stream from the server the selected bitrate version as the data stream; and/or
depending on the receiving of the predetermined signal, change between a pull and a push mode.

Embodiment 32: Device according to embodiment 31, wherein the predetermined signal comprises an information indicating an immanence of an event of preliminary decrease or increase in throughput at which the data stream is streamed via the network.

Embodiment 33: Device according to embodiment 31, wherein the device is configured to
responsive to the receiving of the predetermined signal, increase a buffer fill level; and/or
responsive to the receiving of the predetermined signal, increase the size of the buffer for buffering the data stream; and/or
responsive to the receiving of the predetermined signal, select among the various bitrate versions at which the data represented by the data stream, is available at the server, to be a bitrate version corresponding to a lower bitrate than compared to a currently selected bitrate version; and/or
responsive to the receiving of the predetermined signal, change from the pull to the push mode.

Embodiment 34: Device according to embodiment 31, wherein the device is configured to responsive to the receiving of the predetermined signal, select among the various bitrate versions at which the data represented by the data stream, is available at the server, to be a bitrate version corresponding to a higher bitrate compared to a currently selected bitrate version.

Embodiment 35: Device according to embodiment 31, wherein the predetermined signal comprises an information measuring an event of preliminary decrease or increase in throughput onto a throughput at which the data stream is streamed via the network, wherein the device is configured to
use the information in changing the buffering strategy by changing the buffering strategy depending on the information; and/or
use the information in changing the size of the buffer for buffering the data stream by changing the size of the buffer for buffering the data stream depending on the information; and/or
use the information in changing the strategy of selecting among various bitrate versions at which data represented by the data stream, is available at the server, by changing the strategy depending on the information.

Embodiment 36: Device according to any of embodiments 31 to 35, wherein the predetermined signal comprises an information measuring an event of preliminary decrease or increase in throughput in time and/or in streamed data amount, wherein the device is, at least in a temporal phase lasting until the event of preliminary decrease or increase in throughput,
change the buffering strategy; and/or
change the size of the buffer for buffering the data stream; and/or
change the strategy in selecting among various bitrate versions at which data represented by the data stream, is available at the server, so as to stream from the server the selected bitrate version as the data stream.

Embodiment 37: Device according to any of embodiments 31 to 36, wherein the predetermined signal comprises an information measuring a temporal phase until the event of preliminary decrease or increase in throughput, in time and/or streamed data amount, wherein the device is configured to, at least in a temporal phase lasting until the event of preliminary decrease or increase in throughput,
change the buffering strategy; and/or
change the size of the buffer for buffering the data stream; and/or
change the strategy in selecting among various bitrate versions at which data represented by the data stream, is available at the server, so as to stream from the server the selected bitrate version as the data stream.

Embodiment 38: Device according to any of embodiments 31 to 37, configured to set a temporal play-out time buffered by the client according to the predetermined signal.

Embodiment 39: Device according to any of embodiments 31 to 38, wherein the predetermined signal advises the client to increase an amount of a downloaded and buffered portion of the data stream and the device is configured to increase a buffer fill level responsive to the predetermined signal.

Embodiment 40: Device according to any of embodiments 31 to 38, wherein the predetermined signal advises the client to commence full download and buffering of the data stream and the device is configured to completely buffer the data stream responsive to the predetermined signal.

Embodiment 41: Device according to embodiment 40, wherein the device is configured to select among various bitrate versions at which data represented by the data stream, is available at the server, a predetermined bitrate version so as to buffer the predetermined bitrate version in completely buffering the data stream.

Embodiment 42: Device according to embodiment 41, wherein the device is configured to perform the selection depending on the predetermined signal or such that the predetermined version is among the bitrate versions the one corresponding to a lowest bitrate or one currently selected at the time of receipt of the predetermined signal.

Embodiment 43: Device according to any of embodiments 31 to 38, wherein the predetermined signal advises the client to freeze rate adaptation in adaptively streaming the data stream from the server and the device is configured to select, for a forthcoming portion of the data stream, among various bitrate versions at which data represented by the data stream, is available at the server, one currently selected at the time of receipt of the predetermined signal.

Embodiment 44: Device according to any of embodiments 31 to 38, wherein the device is configured to preliminarily stop downloading the data stream from the server responsive to the predetermined signal.

Embodiment 45: Device according to any of embodiments 39 to 44, wherein the device is configured to send an acknowledgment to the network device responsive to the predetermined signal.

Embodiment 46: Device according to any of embodiments 31 to 45, wherein the predetermined signal comprises an advice for the device and an indication of a reward for following the advice and the device is configured to disregard the predetermined signal depending on the reward.

Embodiment 47: Device according to any of embodiments 31 to 46, wherein the device is configured to, responsive to the predetermined signal, preliminarily not exceed a maximum quality level/bitrate in selecting a representation at which the device adaptively streams data from the server, the selected representation being the streamed data stream.

Embodiment 48: Device according to any of embodiments 31 to 46, wherein the predetermined signal comprises an information measuring a throughput for the client subsequent to the event of preliminary decrease or increase in throughput, wherein the device is configured to, at least in a temporal phase lasting until the event of preliminary decrease or increase in throughput,
change the buffering strategy; and/or
change the size of the buffer for buffering the data stream; and/or
change the strategy in selecting among various bitrate versions at which data represented by the data stream, is available at the server, so as to stream from the server the selected bitrate version as the data stream

Embodiment 49: Device according to any of embodiments 31 to 48, wherein the predetermined signal advises the device to enter the push mode, wherein the device is configured to, responsive to the predetermined signal, decide on entering, or enter, the push mode.

Embodiment 50: Device according to embodiment 49, wherein the device is configured to, when entering the push mode, inform the network device about a buffer fill level of a buffer for buffering the data stream.

Embodiment 51: Device according to embodiment 49, wherein the device configured to, when deciding to enter the push mode, inform the network device about the entrance of the push mode.

Embodiment 52: Device according to any of embodiments 31 to 51, configured to inform the network device about the change in buffering strategy; and/or the change in the size of buffer for buffering the data stream depending on the predetermined signal.

Embodiment 53: Method of streaming a data stream from a server to a client, comprising sending from a network device to the client a predetermined signal,
responsive to the predetermined signal,
change a buffering strategy at the client; and/or
change a size of a buffer for buffering the data stream at the client; and/or
change at the client a strategy of selecting among various bitrate versions at which data represented by the data stream, is available at the server, so as to stream from the server the selected bitrate version as the data stream; and/or
change at the client between a pull and a push mode.

Embodiment 54: Network device, the network device configured to
receive from a client which streams a data stream from a server via a network, information on a yet to be downloaded portion of the data stream,
participate in, or perform a, negotiation of network resources of the network in a manner depending on the information.

Embodiment 55: Network device according to embodiment 54, configured to
in participating in, or performing, the negotiation of network resources in a manner depending on the information,
cause an allocation of increased amount of network resources for the client, increased compared to a currently allocated amount of resources, if the increased network resources suffice to download the yet to be downloaded portion of the data stream to client before an imminent event of preliminary decrease in throughput, and the currently allocated amount of resources would not.

Embodiment 56: Network device, the network device configured to
receive from a client which streams a data stream from a server via a network, information on a yet to be downloaded portion of the data stream,
send a predetermined streaming control signal to the client, in a manner depending on the information.

Embodiment 57: Network device according to embodiment 56, configured to
advice in the predetermined streaming control signal the client of downloading and buffering the yet to be downloaded portion of the data stream if the yet to be downloaded portion of the data stream is lower than a predetermined threshold.

Embodiment 58: Network device according to embodiment 56 or 57, configured to
in participating in, or performing, the negotiation of network resources in a manner depending on the information, request an allocation of increased amount of network resources for the client, increased compared to a currently allocated amount of resources, if the request is granted, send the predetermined streaming control signal to the client.

Embodiment 59: Device for streaming a data stream from a server via a network, the device configured to
inform a network device about a yet to be downloaded portion of the data stream.

Embodiment 60: Device according to embodiment 59, responsive to a predetermined streaming control signal from the network device to increase a buffer fill level by downloading the yet to be downloaded portion of the data stream.

Embodiment 61: Network device, the network device configured to
receive from a client which streams a data stream from a server via a network, information on a play-out mode,
participate in, or perform a, negotiation of network resources of the network in a manner depending on the information.

Embodiment 62: Network device according to embodiment 61, configured to
in participating in, or performing, the negotiation of network resources in a manner depending on the information,
cause an allocation of less or no network resources for the client if the information indicates a pause mode, compared to the client being in a normal play-out mode; and/or
cause an allocation of less or no network resources for the client if the information indicates a slow play mode, compared to the client being in a normal play-out mode; and/or
cause an allocation of more network resources for the client if the information indicates a fast play mode, compared to the client being in a normal play-out mode.

Embodiment 63: Network device, the network device configured to
receive from a client which streams a data stream from a server via a network, information on a play-out mode,
send a predetermined streaming control signal to another client streaming via the network, in a manner depending on the information.

Embodiment 64: Network device according to embodiment 63, configured to
advice in the predetermined streaming control signal the other client of switching to bitrate representation of lower bitrate in downloading a further data stream by adaptively streaming, if the information indicates a fast play mode and/or
advice in the predetermined streaming control signal the other client of switching to bitrate representation of higher bitrate in downloading a further data stream by adaptively streaming, if the information indicates a slow play mode, and/or
advice in the predetermined streaming control signal the other client of switching to bitrate representation of higher bitrate in downloading a further data stream by adaptively streaming, if the information indicates a pause mode.

Embodiment 65: Device for streaming a data stream from a server via a network, the device configured to
Play-out the data stream at one of different play-out modes; and
Inform a network device about the one play-out mode.

Embodiment 66: Device according to embodiment 65, wherein the different play-out modes comprise a normal play-out mode, a pause mode, a slow mode and a fast mode.

Embodiment 67: Network device, the network device configured to
participate in, or perform, a negotiation of network resources of a network for a client which streams a data stream from a server via the network, so that the network resources for the client correspond to a predetermined throughput at which the data stream is streamable from a server via the network to the client,
send to the client, in a manner depending on the predetermined throughput, a predetermined streaming control signal.

Embodiment 68: Network device according to embodiment 67, configured to signal in the predetermined streaming control signal the predetermined throughput.

Embodiment 69: Network device according to embodiment 67, configured to send the predetermined streaming control signal also depending on a manifest describing different bitrate representations between which the client switches in adaptively streaming the data stream.

Embodiment 70: Network device according to embodiment 69, wherein configured to signal in the predetermined streaming control signal a bitrate representation to be switched to by the client.

Embodiment 71: Network device according to any of embodiments 67 to 70, configured to send the predetermined streaming control signal also depending on a buffer fill level informed of by the client.

Embodiment 72: Device for streaming a data stream from a server via a network using adaptive streaming, wherein the device is configured to, responsive to a predetermined streaming control signal received from a network device, perform a bitrate adaptation depending on the predetermined streaming control signal and independent from a buffer fill level.

Embodiment 73: Device according to embodiment 72, configured to keep the network device updated on a buffer fill level of a buffer of the device for buffering the data stream.

Embodiment 74: Network device, the network device configured to
receive from a client which streams a data stream from a server via a network, an information of a buffer fullness of a buffer buffering the data stream,
send to the client, in a manner at least depending on the buffer fullness, a predetermined streaming control signal.

Embodiment 75: Network device according to embodiment 74, configured such that the predetermined streaming control signal advises the client to interrupt further streaming the data stream if the buffer fullness indicates a high buffer fill level and a high data traffic over the network is indicated by the network.

Embodiment 76: Network device, the network device configured to
receive from a client which streams a data stream from a server via the network, a signal indicating the client's entering a discontinuous streaming mode,
negotiate network resources for the client in a manner at least depending on the client being in, or not being in, the discontinuous streaming mode.

Embodiment 77: Network device according to embodiment 76, wherein the network device is configured to
negotiate network resources for the client in a manner so that a variation of network resources allocated to the client depending on a current demand for network resources is more extreme if the client is in the discontinuous streaming mode, than compared to a case of the client not being in the discontinuous streaming mode.

Embodiment 78: Network device according to embodiment 76 or 77, configured to
detect an event of a preliminary decrease in throughput at which a client adaptively streams a data stream from a server via a network, and
if the client being is in the discontinuous streaming mode, negotiate network resources for the client ahead of the event of a preliminary decrease in throughput in a manner so that an amount of network resources allocated to the client ahead of the event of a preliminary decrease in throughput is increased compared to a case of the client not being in the discontinuous streaming mode.

Embodiment 79: Network device according to any of embodiments 76 to 79, configured to if the client being is in the discontinuous streaming mode, negotiate network resources for the client during the event of a preliminary decrease in throughput in a manner so that an amount of network resources allocated to the client during the event of a preliminary decrease in throughput is decreased compared to a case of the client not being in the discontinuous streaming mode.

Embodiment 80: Network device according to any of embodiments 76 to 79, configured to detect an event of a preliminary increase in throughput at which a client adaptively streams a data stream from a server via a network, and
if the client being is in the discontinuous streaming mode, negotiate network resources for the client during the event of a preliminary increase in throughput in a manner so that an amount of network resources allocated to the client during the event of a preliminary increase in throughput is increased compared to a case of the client not being in the discontinuous streaming mode.

Embodiment 81: Network device according to any of embodiments 76 to 80, configured to inform the client on changes in an amount of negotiated network resources for the client.

Embodiment 82: Device for streaming a data stream from a server over a network, configured to
use, when being in a discontinuous streaming mode, a larger buffer for buffering the data stream and/or a buffer strategy resulting in a higher buffer fill level, than compared to not being in the discontinuous streaming mode;
inform a network device about being in the discontinuous streaming mode.

Embodiment 83: Network device, the network device configured to
Determine a current location of a client which streams a data stream from a server via a network,
send to the client, in a manner at least depending on the current location, a predetermined streaming control signal.

Embodiment 84: Network device according to embodiment 83, wherein the network device is configured such that the predetermined streaming control signal advises the client to commence full download and buffering of the data stream.

Embodiment 85: Network device according to embodiment 84, wherein the predetermined signal indicates a maximum quality level/bitrate to be preliminarily not exceed by a representation at which the client adaptively streams media from the server.

Embodiment 86: Network device according to embodiment 84, configured such that the predetermined streaming control signal advises the client to transition from a pull mode to a push mode to adaptively stream the data stream from the server and the network device is configured to push the data stream to the client via the network when the client is in the push mode.

Embodiment 87: Network device according to any of embodiments 84 to 86, configured to use the current location for looking-up a current streaming condition at the current location in a predetermined map and perform the sending in a manner depending on the current streaming condition.

Embodiment 88: Device for streaming a data stream from a server via a network, the device configured to
Receive a first predetermined signal from a network device of the network, the first predetermined signal indicating a network related information; and
Depending on the first predetermined signal, sending a second predetermined signal to the network device for use in negotiation of network resources for streaming the data stream from server via the network.

Embodiment 89: Device according to embodiment 88, wherein the device is configured to enter a discontinuous streaming mode depending on the first predetermined signal and configured such that the second predetermined signal indicating the device's entering the discontinuous streaming mode.

Embodiment 90: Device according to embodiment 88, wherein the device is configured such that the second predetermined signal advises the network device to negotiate an increased amount of network resources ahead of the imminent change in throughput if the first predetermined signal indicates an event of decrease in throughput as the imminent change in throughput.

Embodiment 91: Device for downloading data items selected by user input from a server via a network, the device configured to
perform a pre-fetch of the data items depending on a signal from a network device informing on preliminary change in throughput at which the data items are downloadable via the network.

Embodiment 92: Device according to embodiment 91, configured to perform the prefetch also dependent on a current location of the user.

Embodiment 93: Network device comprising
a first interface configured to communicate with a client which downloads data from a server via a network; and
a second interface configured to communicate with the network.

Embodiment 94: Network device according to embodiment 93, wherein
the first interface is configured to use HTTP messages for communication.

Embodiment 95: Network device according to embodiment 93 or 94, wherein the network device is configured to influence, over the first interface, a mode of operation of client with respect to the downloading the data from the server depending on network information relating to the download of the data from the server via the network to the client, and to gain the network information over the second interface.

Embodiment 96: Network device according to any of embodiments 93 to 95, wherein the network device is configured to influence, over the second interface, a network resource allocation of the network with respect to the downloading the data from the server to the client depending on download information relating to the download of the data from the server via the network to the client, and to gain the download information from the client.

Embodiment 97: Network device according to any of embodiments 93 to 96, wherein the network device is configured to use the first and second interfaces to improve the download of the data from the server to the client over the network upon being contacted by the client over the first interface using an IP address of the network device.

Embodiment 98: Network device according to embodiment 96, wherein the network device is configured to gain from a request via which the network device is contacted by the client, a further IP address of the client and to use said further IP address, over the second interface, to obtain from the network an identifier for, or to be used by the network as a means for, differentiating network information of the network relating to network resources contributing to the download of the data from the server via the network to the client from other network information of the network relating to other network resources not contributing to the download of the data from the server via the network to the client.

Embodiment 99: Network device according to embodiment 96, wherein the client is a streaming client.

Embodiment 100: Device for downloading data from a server over a network, configured to
perform a bearer set-up with the network to commence the download,
receive from the network or from the server, an IP address of a network device;
use the IP address, to obtain from the network device network information relating to the download of the data from the server via the network, and adapt the download depending on the network information, and/or send to the network device download information relating to a buffering of, and/or a play-out of, the data from the server via the network.

Embodiment 101: Device according to embodiment 100, wherein the device is configured to activate the network device by sending an activation request to the IP address.

Embodiment 102: Device according to embodiment 100 or 101, wherein the device is configured to request a MPD from the server and provide the network device with information derived from the MPD or a copy of at least a portion of the MPD.

Embodiment 103: Device according to any of embodiments 100 to 102, configured to, in using the IP address, to receive from the network device network information relating to the download of the data from the server via the network, and adapt the download depending on the network information, and/or send to the network device download information relating to a buffering of, and/or a play-out of, the data from the server via the network, send a request to the network device, the request including a further IP address of the device.

Embodiment 104. Method for downloading data over a network from a server to a client, comprising
send an IP address of a network device to the client;
the client contacting the network device using the IP address,
differentiate network information of the network relating to network resources contributing to the download of the data from the server via the network to the client from other network information of the network relating to other network resources not contributing to the download of the data from the server via the network to the client, using a further IP address of the client;
use at the client network information from the network device relating to the download of the data from the server via the network, to adapt the download at the client depending on the network information, and/or use at the network device, download information from the client relating to a buffering of, and/or a play-out of, the data downloaded from the server along with the network information, to influence the client with respect to the downloading the data from the server or to influence a network resource allocation of the network with respect to the downloading the data from the server to the client.

Embodiment 105. Method according to embodiment 104, wherein
the IP address of the network device is sent
from the network to the client responsive to a bearer set-up between the client and the network,
from the network to the client by intercepting an MPD, when travelling from server to client, describing how the data is to be streamed from the server, and entering the IP address of the network device into the MPD;
from the sever to the client by way of the MPD.

Embodiment 106: Method comprising
detecting an event of a preliminary decrease or increase in throughput at which a client streams a data stream from a server via a network; and
depending on the detecting the event of preliminary decrease or increase in throughput, sending to the client a predetermined signal.

Embodiment 107: Method for streaming a data stream from a server via a network, the device comprising
receiving a predetermined signal from a network device; and
depending on the receiving of the predetermined signal, change a buffering strategy; and/or depending on the receiving of the predetermined signal, changing a size of a buffer for buffering the data stream; and/or
depending on the receiving of the predetermined signal, changing a strategy of selecting among various bitrate versions at which data represented by the data stream, is available at the server, so as to stream from the server the selected bitrate version as the data stream; and/or
depending on the receiving of the predetermined signal, changing between a pull and a push mode.

### 108: Method comprising

Embodiment receiving from a client which streams a data stream from a server via a network, information on a yet to be downloaded portion of the data stream,
participateing in, or performing a, negotiation of network resources of the network in a manner depending on the information.

Embodiment 109: Method comprising
receiving from a client which streams a data stream from a server via a network, information on a yet to be downloaded portion of the data stream,
send a predetermined streaming control signal to the client, in a manner depending on the information.

Embodiment 110: Method comprising
receiving from a client which streams a data stream from a server via a network, information on a play-out mode,
participating in, or performing a, negotiation of network resources of the network in a manner depending on the information.

Embodiment 111: Method comprising
receiving from a client which streams a data stream from a server via a network, information on a play-out mode,
sending a predetermined streaming control signal to another client streaming via the network, in a manner depending on the information.

Embodiment 112: Method for streaming a data stream from a server via a network, the method comprising
Playing-out the data stream at one of different play-out modes; and
Informing a network device about the one play-out mode.

Embodiment 113: Method comprising
participating in, or performing, a negotiation of network resources of a network for a client which streams a data stream from a server via the network, so that the network resources for the client correspond to a predetermined throughput at which the data stream is streamable from a server via the network to the client,
sending to the client, in a manner depending on the predetermined throughput, a predetermined streaming control signal.

Embodiment 114: Method comprising
receiving from a client which streams a data stream from a server via a network, an information of a buffer fullness of a buffer buffering the data stream,
sending to the client, in a manner at least depending on the buffer fullness, a predetermined streaming control signal.

Embodiment 115: Method comprising
receiving from a client which streams a data stream from a server via the network, a signal indicating the client's entering a discontinuous streaming mode,
negotiating network resources for the client in a manner at least depending on the client being in, or not being in, the discontinuous streaming mode.

Embodiment 116: Method for streaming a data stream from a server over a network, configured to
using, when being in a discontinuous streaming mode, a larger buffer for buffering the data stream and/or a buffer strategy resulting in a higher buffer fill level, than compared to not being in the discontinuous streaming mode;
informing a network device about being in the discontinuous streaming mode.

Embodiment 117: Method comprising
determining a current location of a client which streams a data stream from a server via a network,
sending to the client, in a manner at least depending on the current location, a predetermined streaming control signal.

Embodiment 118: Method for streaming a data stream from a server via a network, the device comprising
receiving a first predetermined signal from a network device of the network, the first predetermined signal indicating a network related information; and
depending on the first predetermined signal, sending a second predetermined signal to the network device for use in negotiation of network resources for streaming the data stream from server via the network.

Embodiment 119: Method for downloading data items selected by user input from a server via a network, comprising
performing a pre-fetch of the data items depending on a signal from a network device informing on preliminary change in throughput at which the data items are downloadable via the network.

Embodiment 120: Method comprising
communicating with a client which downloads data from a server via a network over a first interface; and
communicate with the network over a second interface.

Embodiment 121: Method for downloading data from a server over a network, comprising
performng a bearer set-up with the network to commence the download,
receiving from the network or from the server, an IP address of a network device;
using the IP address, to obtain from the network device network information relating to the download of the data from the server via the network, and adapt the download depending on the network information, and/or send to the network device download information relating to a buffering of, and/or a play-out of, the data from the server via the network.

Embodiment 122: Computer program having a program code for performing, when running on a computer, a method according to any of embodiments 105 to 121.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The apparatus described herein, or any components of the apparatus described herein, may be implemented at least partially in hardware and/or in software.

The methods described herein may be performed using a hardware apparatus, or using a computer, or using a combination of a hardware apparatus and a computer.

The methods described herein, or any components of the apparatus described herein, may be performed at least partially by hardware and/or by software.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

### References

[1] RP-160633, "Study on Context Aware Service Delivery in RAN for LTE", CMCC, Goteborg, Sweden, March 7-10 2016.
[2] R3-162080, "Reply LS on scope of SA4 SAND SI", Gothenburg, Sweden, Aug. 2016
[3] TR 36.933, "Study on Context Aware Service Delivery in RAN for LTE", Release 14, 3GPP
[4] R3-161676, "Video object deadline-aware scheduling", Gothenburg, Sweden
[5] TS 23.401, "General Packet Radio Service (GPRS) enhancements for Evolved Universal Terrestrial Radio Access Network (E-UTRAN) access", Relese 14, 3GPP
[6] TR 26.957, "Study on Server And Network-assisted Dynamic Adaptive Streaming over HTTP (DASH) (SAND) for 3GPP multimedia services"

## Claims

1. Device for downloading data from a server over a network, configured to
perform a bearer set-up with the network to commence the download,
receive from the network or from the server, an IP address of a network device;
use the IP address, to obtain from the network device network information relating to the download of the data from the server via the network, and adapt the download depending on the network information, and/or send to the network device download information relating to a buffering of, and/or a play-out of, the data from the server via the network.

2. Device according to claim 1, wherein the device is configured to activate the network device by sending an activation request to the IP address.

3. Device according to claim 1 or 2, wherein the device is configured to request a MPD from the server and provide the network device with information derived from the MPD or a copy of at least a portion of the MPD.

4. Device according to any of claims 1 to 3, configured to, in using the IP address, to receive from the network device network information relating to the download of the data from the server via the network, and adapt the download depending on the network information, and/or send to the network device download information relating to a buffering of, and/or a play-out of, the data from the server via the network, send a request to the network device, the request including a further IP address of the device.

5. Method for downloading data from a server over a network, comprising
performing a bearer set-up with the network to commence the download,
receiving from the network or from the server, an IP address of a network device;
using the IP address, to obtain from the network device network information relating to the download of the data from the server via the network, and adapt the download depending on the network information, and/or send to the network device download information relating to a buffering of, and/or a play-out of, the data from the server via the network,

6. Computer program having a program code for performing, when running on a computer, a method according to claim 5.
